# EUROPEAN PATENT APPLICATION

(11) **EP 4 742 016 A1**
(43) Date of publication of application: **13.05.2026**
(21) Application number: 24892877.2
(22) Date of filing: 05.08.2024
(51) Int. Cl.: G06F 3/04817

(54) **INPUT INTERACTION METHOD, ELECTRONIC DEVICE, AND READABLE MEDIUM**

(30) Priority: 23.11.2023 CN 202311585514
(71) Applicant: Honor Device Co., Ltd., Shenzhen, Guangdong 518040 (CN)
(72) Inventor: HUANG, Yufei, Shenzhen, Guangdong 518040 (CN); YI, Jie, Shenzhen, Guangdong 518040 (CN); NIU, Siyue, Shenzhen, Guangdong 518040 (CN)
(74) Representative: Goddar, Heinz J.
(86) International application number: PCT/CN2024/109733
(87) International publication number: WO 2025/107713

(57) **Abstract**

This application provides an input interaction method, an electronic device, and a readable medium. The input interaction method includes: An electronic device displays a first interface, where the first interface includes a first area, a first makeup sub-option and a first button are displayed in the first area, and the first makeup sub-option corresponds to a first makeup look; the electronic device displays a first makeup element, a second makeup element, and a second button in the first area in response to a tapping operation of a user on the first button, where the first makeup element is in a first state, the second makeup element is in a second state, and a plurality of options of the first makeup element are further displayed in the first area; the electronic device displays the first makeup sub-option and the second makeup sub-option in the first area in response to a tapping operation of the user on the second button, where the second makeup sub-option corresponds to a second makeup look, so that the user performs the tapping operation on the first button and the second button, and the electronic device obtains, in response to the tapping operation of the user, a makeup sub-option corresponding to a new makeup look, to enrich a facial beautification function.

## Description

This application claims priority to Chinese Patent Application No. 202311585514.3, filed with the China National Intellectual Property Administration on November 23, 2023 and entitled "INPUT INTERACTION METHOD, ELECTRONIC DEVICE, AND READABLE MEDIUM", which is incorporated herein by reference in its entirety.

### TECHNICAL FIELD

This application relates to the field of data processing technologies, and in particular, to an input interaction method, an electronic device, a computer program product, and a computer-readable storage medium.

### BACKGROUND

Facial beautification is a common function of an electronic device. For example, when using an electronic device to take a picture, a user enables a facial beautification function of a camera, and the facial beautification function is used to perform facial beautification processing on an image captured by the camera. However, the facial beautification function of the electronic device has room for improvement.

### SUMMARY

This application provides an input interaction method, an electronic device, a computer program product, and a computer-readable storage medium, to enrich a facial beautification function by interacting with a user.

To achieve the foregoing objective, this application provides the following technical solutions.

According to a first aspect, this application provides an input interaction method, including: An electronic device displays a first interface, where the first interface includes a first area, a first makeup sub-option and a first button are displayed in the first area, and the first makeup sub-option corresponds to a first makeup look; the electronic device displays a first makeup element, a second makeup element, and a second button in the first area in response to a tapping operation of a user on the first button, where the first makeup element is in a first state, the second makeup element is in a second state, and a plurality of options of the first makeup element are further displayed in the first area; and the electronic device displays the first makeup sub-option and a second makeup sub-option in the first area in response to a tapping operation of the user on the second button, where the second makeup sub-option corresponds to a second makeup look.

The first area may refer to a viewfinder frame of the first interface, the first button may refer to a custom button, and the custom button is used to provide a makeup look created by the user. The second button refers to a save button, and is used to save the makeup look created by the user. It may be learned from the foregoing content that, the user may perform the tapping operations on the first button and the second button, and the electronic device may obtain a makeup sub-option of a user-defined makeup look in response to the tapping operations of the user, to enrich a facial beautification function.

In a possible implementation, before that the electronic device displays the first makeup sub-option and the second makeup sub-option in the first area in response to the tapping operation of the user on the second button, the method further includes: The electronic device receives a tapping operation of the user on a first option of the first makeup element; and the electronic device displays, in response to the tapping operation of the user on the first option of the first makeup element, that the first option is in the first state and another option of the first makeup element is in the second state.

In the foregoing possible implementation, each option of the first makeup element corresponds to one makeup effect, the first state is a selected state, the second state is a non-selected state, and the user may select, by tapping the first option of the first makeup element, a makeup effect corresponding to the first option.

In a possible implementation, a first portrait is further displayed in the first area of the first interface, and after receiving the tapping operation of the user on the first option of the first makeup element, the method further includes: The electronic device displays, in response to the tapping operation of the user on the first option of the first makeup element, a makeup look of the first option in an area in which the first portrait corresponds to the first makeup element. In this way, the makeup look of the first option selected by the user may be added to the portrait displayed in the first area.

In a possible implementation, the first portrait is further displayed in the first area of the first interface, and the method further includes: The electronic device displays the second makeup look on the first portrait in response to the tapping operation of the user on the second button. In this way, the makeup look created by the user is added to the portrait displayed in the first area.

In a possible implementation, the electronic device displays the first makeup sub-option and the second makeup sub-option in the first area, the second makeup sub-option is in the first state, and the first makeup sub-option is in the second state; and the electronic device further displays a scale bar of the second makeup sub-option in the first area, the scale bar including a scale value and a scale mark. In this way, the scale bar corresponding to the makeup sub-option selected by the user is displayed, and intensity of the makeup look is conveniently adjusted by inputting a slide operation at the scale bar.

In a possible implementation, an icon of the second makeup sub-option in the first state is a first icon.

In a possible implementation, after that the electronic device displays the first makeup sub-option and the second makeup sub-option in the first area, the method further includes: The electronic device displays, in response to a tapping operation of the user on the first makeup sub-option, that the first makeup sub-option is in the first state, and the second makeup sub-option is in the second state, where an icon of the second makeup sub-option is a second icon; and the electronic device further displays a scale bar of the first makeup sub-option in the first area, where the scale bar includes a scale value and a scale mark. In this way, whether the makeup sub-option is in the selected state is determined by using the icon of the makeup sub-option.

In a possible implementation, the electronic device further displays a third button in the first area in response to the tapping operation of the user on the first button, and the method further includes: The electronic device displays the first interface in response to a tapping operation of the user on the third button. The third button refers to a close button, and is used to close a makeup creation interface.

In a possible implementation, the first portrait is further displayed in the first area of the first interface, the scale bar of the second makeup sub-option includes a first scale value, and the method further includes: The electronic device receives a left-slide operation that is input by the user at the scale bar of the second makeup sub-option; and the electronic device displays the scale mark and a second scale value at the scale bar of the second makeup sub-option in response to the left-slide operation of the user, where the second scale value is greater than the first scale value; and the electronic device displays an updated makeup look corresponding to the second makeup sub-option on the first portrait.

In a possible implementation, the method further includes: The electronic device displays a first mark at the first scale value in the scale bar of the second makeup sub-option in response to the left-slide operation of the user, to indicate a default scale value of the second makeup sub-option by using the first mark.

In a possible implementation, the method further includes: The electronic device receives a long-press operation of the user on the second makeup sub-option; the electronic device displays, in response to the long-press operation of the user on the second makeup sub-option, that the second makeup sub-option is in a third state, where the third state is in an editable state; the electronic device displays a second interface in response to a tapping operation of the user on a name of the second makeup sub-option, where the second interface includes a first pop-up window and a keyboard of an input method, and the first pop-up window includes a text input area and a fourth button; the electronic device receives a text that is input by the user in the text input area, and displays the text that is input by the user in the text input area; and the electronic device displays the first makeup sub-option and the second makeup sub-option in the first area in response to a tapping operation of the user on the fourth button, where the second makeup button is in the third state, and the name of the second makeup sub-option is the text that is input by the user. In this way, the name of the second makeup sub-option created by the user is changed.

In a possible implementation, the second makeup sub-option in a third state further includes a fifth button, and the method further includes: The electronic device displays a second pop-up window in response to a tapping operation of the user on the fifth button, where the second pop-up window includes prompt information for deleting the second makeup sub-option and a sixth button; and in response to a tapping operation of the user on the sixth button, the electronic device displays the first makeup sub-option, and skips displaying the second makeup sub-option. In this way, the makeup created by the user is deleted.

In a possible implementation, the second pop-up window further includes a seventh button, and the method further includes: The electronic device displays the first makeup sub-option and the second makeup sub-option in response to a tapping operation of the user on the seventh button, where the second makeup sub-option is in the third state.

In a possible implementation, the electronic device further displays the first button in the first area in response to the tapping operation of the user on the second button. In this way, after creating a customized makeup look, the user may create another customized makeup look by using the first button.

In a possible implementation, a third makeup sub-option is further displayed in the first area of the first interface of the electronic device, the third makeup sub-option corresponds to a third makeup look, and in response to the tapping operation of the user on the second button, the electronic device displays the first makeup sub-option and the second makeup sub-option in the first area, and skips displaying the first button.

In a possible implementation, an icon of the third makeup sub-option is the same as the icon of the second makeup sub-option.

In a possible implementation, the second makeup sub-option is located after the third makeup sub-option in the first area, and the method further includes: The electronic device displays, in response to an operation of dragging the second makeup sub-option to a position before the third makeup sub-option and then releasing the second makeup sub-option, that the second makeup sub-option is located before the third makeup sub-option in the first area. In this way, a display position of the makeup sub-option is adjusted. According to a second aspect, this application provides an electronic device, including one or more processors, a memory, and a display screen. The memory and the display screen are coupled to the one or more processors; the memory is configured to store a computer program; the computer program includes computer instructions; and when the one or more processors execute the computer instructions, the electronic device performs the input interaction method provided in any one of the first aspect and the implementations of the first aspect.

According to a third aspect, this application provides a computer-readable storage medium, configured to store a computer program. The computer program, when executed, is specifically configured to implement the input interaction method according to any one of the first aspect and the implementations of the first aspect.

According to a fourth aspect, this application provides a computer program product. The computer program product, when run on a computer, enables the computer to perform the input interaction method according to any one of the first aspect and the implementations of the first aspect.

### BRIEF DESCRIPTION OF DRAWINGS

FIG. 1A to FIG. 1D are presentation diagrams of an entrance of a facial beautification and makeup function according to an embodiment of this application;
FIG. 2A to FIG. 2F, FIG.3, FIG. 4A to FIG. 4C, FIG. 5A to FIG. 5C, and FIG. 6A to FIG. 6D are presentation diagrams of an interface corresponding to an input operation of a user for a facial beautification function according to an embodiment of this application;
FIG. 7A to FIG. 7D, FIG. 8A to FIG. 8D, FIG. 9A to FIG. 9E, FIG. 10, and FIG. 11A to FIG. 11E are presentation diagrams of an interface corresponding to an input operation of a user for a makeup function according to an embodiment of this application;
FIG. 12 is a presentation diagram of an interface of a facial beautification function and a makeup function according to another embodiment of this application; and
FIG. 13 is a diagram of a hardware structure of an electronic device according to an embodiment of this application.

### DESCRIPTION OF EMBODIMENTS

The following clearly and completely describes technical solutions in embodiments of this application with reference to the accompanying drawings in embodiments of this application. The terms used in the following embodiments are merely used for describing specific embodiments, and are not intended to limit this application. The singular forms "one", "a", "the", "the foregoing", "this", and "the one" used in this specification and the appended claims of this application are also intended to include forms such as "one or more", unless otherwise clearly specified in the context.

Referring to "some embodiments" described, or the like in this specification means that one or more embodiments of this application include a specific feature, structure, or characteristic described with reference to embodiments. Therefore, statements "in an embodiment", "in some embodiments" "in some other embodiments", and the like appearing in different parts of this specification do not necessarily refer to a same embodiment, but mean "one or more but not all embodiments", unless otherwise specially emphasized in other manners. The terms "include", "comprise", "have" and their variations mean "including but not limited to", unless otherwise specially emphasized in other manners.

"A plurality of" in embodiments of this application means two or more. It should be noted that, in the descriptions of embodiments of this application, words such as "first" and "second" are merely used for distinguishing, and cannot be understood as an indication or implication of relative importance or an indication or implication of a sequence.

Embodiments of this application provide an input interaction method, to enrich a facial beautification function by using the input interaction method between a user and an electronic device. In some embodiments, in addition to the facial beautification function, the electronic device further supports a makeup function.

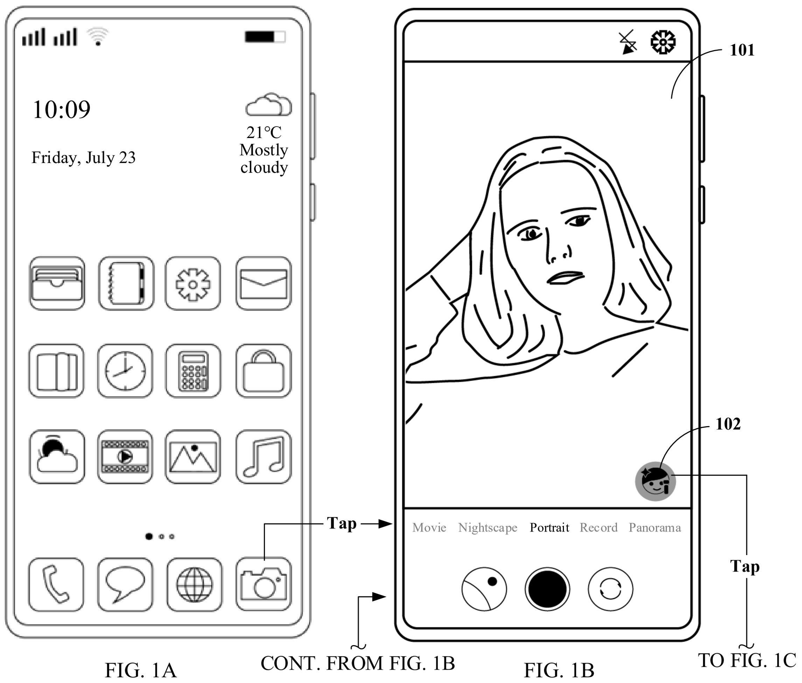

FIG. 1A to FIG. 1D are interface diagrams of enabling a facial beautification and makeup function by a user by using a mobile phone as an example.

As shown in FIG. 1A, the user taps an icon of a camera application to start a camera, and in response to a user operation, the mobile phone displays a camera preview interface shown in FIG. 1B. In some embodiments, an entrance of the facial beautification and makeup function is configured in a portrait mode of the camera. Based on this, the camera preview interface shown in FIG. 1B is in a portrait photographing mode. A facial beautification and makeup button 102 is displayed in a viewfinder frame 101. The facial beautification and makeup button 102 is used to enable a facial beautification function or a makeup function.

As shown in FIG. 1B, the user taps the facial beautification and makeup button 102, and the mobile phone displays the camera preview interface (also referred to as a setting interface or a setting option) of the facial beautification and makeup function in response to a tapping operation of the user. In some embodiments, in response to an operation of tapping the facial beautification and makeup button 102 by the user, the mobile phone presents a camera preview interface of the facial beautification function by default. Certainly, the mobile phone may also display a camera preview interface of the makeup function by default. This is not limited.

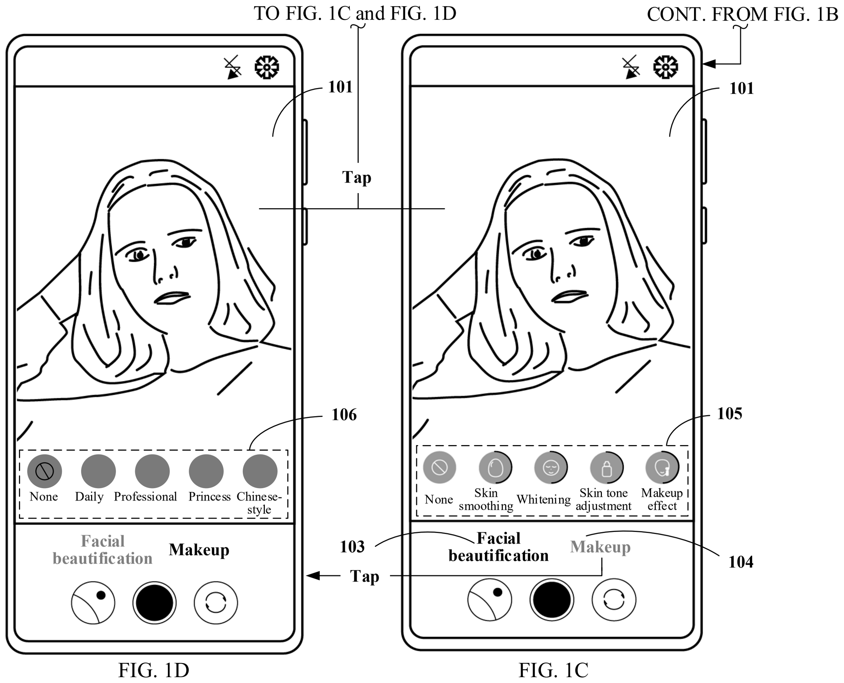

FIG. 1C shows the camera preview interface of the facial beautification function. The camera preview interface of the facial beautification function includes a facial beautification button 103 and a makeup button 104. The facial beautification button 103 is in a selected state, and the makeup button 104 is in a non-selected state. A plurality of sub-options 105 of the facial beautification function are displayed in the viewfinder frame 101, and each sub-option corresponds to one facial beautification manner. For example, the plurality of sub-options may include: none, skin smoothing, whitening, skin tone adjustment, makeup effect, AI reshaping, face slimming, eye enlargement, nose reshaping, and head resizing.

In some embodiments, each facial beautification sub-option may be selected by the user.

In some embodiments, the user may input a slide operation at a plurality of facial beautification sub-options 105, to display the plurality of facial beautification sub-options in a sliding manner. For example, FIG. 1C shows some facial beautification sub-options of the facial beautification function, a non-displayed facial beautification sub-option is hidden, and the user may control the mobile phone to display the hidden facial beautification sub-option through the slide operation.

In some embodiments, in addition to the sub-option "none", an icon of each remaining facial beautification sub-option is configured with an outer circle (that is, a semi-circular black bar at an edge of the icon), and the outer circle indicates a default value of a facial beautification special effect corresponding to the facial beautification sub-option.

In some embodiments, the facial beautification function may be configured to not be automatically enabled, that is, when the user taps the facial beautification and makeup button 102 to control the mobile phone to enter a setting interface of the facial beautification function, the facial beautification function is not automatically enabled, that is, the facial beautification function is set to be disabled by default. Based on this, the plurality of sub-options shown in FIG. 1C are all in the non-selected state. In some embodiments, the mobile phone starts the camera application, and an image presented in the camera preview interface has a facial beautification special effect. Based on this, the sub-option "none" shown in FIG. 1C is also in the non-selected state.

It should be noted that, for the purpose of drawing simplicity, a character displayed in the viewfinder frame 101 in FIG. 1C is displayed without a facial beautification special effect. Similarly, characters displayed in the viewfinder frame 101 in the accompanying drawings related to the following content of this application are displayed without facial beautification special effects or makeup looks corresponding to makeups, but this does not constitute a limitation.

In some embodiments, the user selects the AI reshaping sub-option, and the mobile phone may obtain a face image of the user. Identification of facial skeletal features is performed on the face image of the user, and differentiated foundation treatment is performed on the face image of the user based on identified facial skeletal features, to beautify the face image of the user.

The user may tap the facial beautification button 103 or the makeup button 104 to control the camera to enable the facial beautification function or the makeup function. As shown in FIG. 1C, the user taps the makeup button 104, and controls the facial beautification button 103 to be in the non-selected state and controls the makeup button 104 to be in the selected state. In response to a tapping operation of the user, the mobile phone displays the camera preview interface of the makeup function. As shown in FIG. 1D, a plurality of sub-options 106 of the makeup function are displayed in the viewfinder frame 101, and each sub-option corresponds to one makeup look. For example, the plurality of sub-options include: none, daily, professional, princess, Chinese-style, Japanese-style, Korean-style, Thai-style, and men.

In some embodiments, each makeup sub-option may also be selected by the user.

In some embodiments, the user may input the slide operation at the makeup sub-options 106, to display the plurality of makeup sub-options in a sliding manner. For example, FIG. 1D shows some makeup sub-options of the makeup function, makeup sub-options that are not displayed are hidden, and the user may control the mobile phone to display the hidden makeup sub-options through the slide operation.

In some embodiments, the makeup function may alternatively be configured to not be automatically enabled, and a character in the image displayed in the camera preview interface does not have a makeup look. Based on this, the sub-option "none" in the plurality of sub-options shown in FIG. 1D is in the selected state.

In some embodiments, the mobile phone enables, for the first time, the portrait mode in which the facial beautification and makeup function is configured, and bubble guidance may be performed on the facial beautification and makeup function. In some embodiments, when the user starts the camera application, and controls the camera to be in the portrait mode, the mobile phone displays the camera preview interface, the camera preview interface may display a pop-up window, and the pop-up window includes introduction content of the facial beautification and makeup function. In some other embodiments, the camera preview interface may also display a prompt control of a new function. The user taps the prompt control, and the mobile phone may display the introduction content of the facial beautification and makeup function.

The "first time" proposed in the foregoing content may be understood as follows: 1. A new mobile phone is configured with the facial beautification and makeup function. 2. A software system of an old mobile phone is upgraded, and an upgraded system version includes the facial beautification and makeup function.

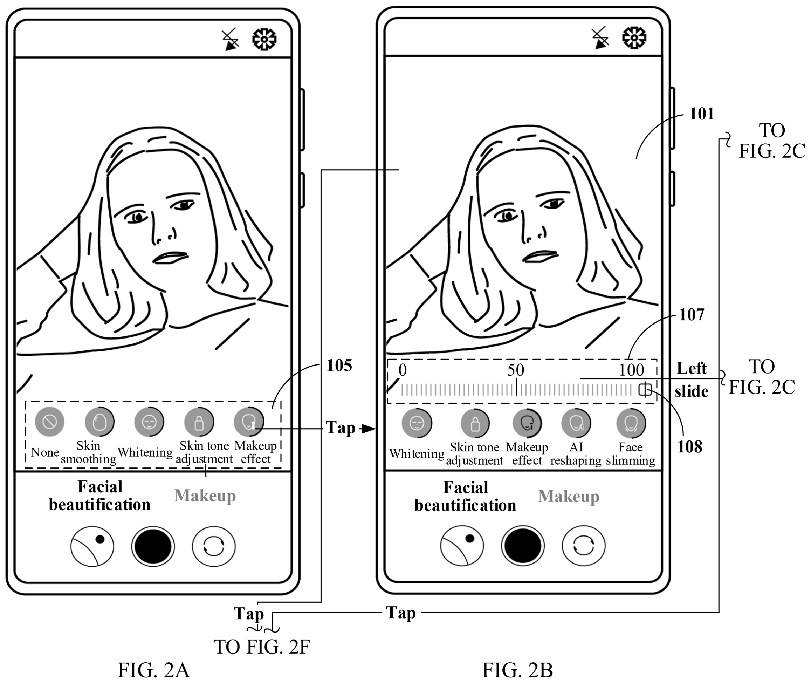

In some embodiments, after the mobile phone enables the facial beautification function, the user may input a plurality of operations in the camera preview interface of the facial beautification function. For example, FIG. 2A to FIG. 2F show interface diagrams corresponding to an operation of selecting a facial beautification sub-option, an operation of adjusting a scale value of a facial beautification sub-option to adjust a facial beautification level, an operation of disabling facial beautification, and an operation of minimizing the setting interface of the facial beautification function.

The user selects one facial beautification sub-option, to add a facial beautification special effect corresponding to the facial beautification sub-option to an image presented in the camera preview interface. For example, as shown in FIG. 2A, the user taps a makeup effect sub-option in the plurality of facial beautification sub-options 105. In response to the tapping operation of the user, the mobile phone adds a facial beautification special effect corresponding to a makeup effect to a character displayed in the viewfinder frame 101, displays a scale bar 107 of the makeup effect sub-option in the viewfinder frame 101, and further controls the facial beautification sub-option to be in the selected state, as shown in FIG. 2B.

In some embodiments, an icon of the facial beautification sub-option in the selected state is displayed in a highlighted state, and is displayed in the center of the plurality of facial beautification sub-options.

For example, the first and last scale values (0 and 100) of a scale interval from 0 to 100 and a plurality of scale marks are displayed in the scale bar 107, and each scale mark may indicate one scale value in the scale interval from 0 to 100. The first scale value indicates the lightest facial beautification special effect, and may be usually understood as no facial beautification special effect, and the last scale value indicates the strongest facial beautification special effect. Intensity of facial beautification of the character in the viewfinder frame 101 may be further adjusted through a slide operation that is input by the user at the scale bar 107.

For another example, a default value corresponding to an outer circle configured for the icon of the facial beautification sub-option is a middle scale value of the scale interval. The user selects the makeup effect sub-option, and the middle scale value (50) is further displayed in the scale bar 107 of the makeup effect sub-option displayed in the viewfinder frame 101.

The user may input the slide operation at the scale bar 107, to display the scale value in a sliding manner. In some embodiments, through a left-slide operation of the user, the middle scale value displayed in the scale bar 107 is updated to a scale value between the middle scale value to the last scale value, and through a right-slide operation of the user, the middle scale value displayed in the scale bar 107 is updated to a scale value from the first scale value to the middle scale value. In some embodiments, a slide distance corresponding to the slide operation may indicate an updated value of the middle scale value displayed in the scale bar 107.

In some embodiments, through the slide operation that is input by the user at the scale bar 107, the outer circle configured for the icon of the facial beautification sub-option may further be enlarged or reduced. The slide operation of the user causes the scale value displayed in the scale bar to be increased, and the outer circle configured for the icon of the facial beautification sub-option to be enlarged; otherwise, the scale value and the outer circle are reduced.

In some embodiments, a comparison button 108 is further displayed in the scale bar 107. The user may tap the comparison button 108, to remove the facial beautification special effect from the character displayed in the viewfinder frame 101. In this way, the user may conveniently view an image to which the facial beautification special effect is added and an image to which the facial beautification special effect is not added, and compare a difference between the two images.

For example, as shown in FIG. 2B, the user inputs a left-slide operation at the scale bar 107, and in response to the left-slide operation of the user, the mobile phone displays, in the scale bar 107, a scale value of 65 indicated by a slide distance corresponding to the left-slide operation. To facilitate viewing, by the user, a position of a default value of the facial beautification sub-option in the scale bar 107, a default value mark is displayed at the bottom of the default value. For example, a dot 109 shown in FIG. 2B is the default value mark.

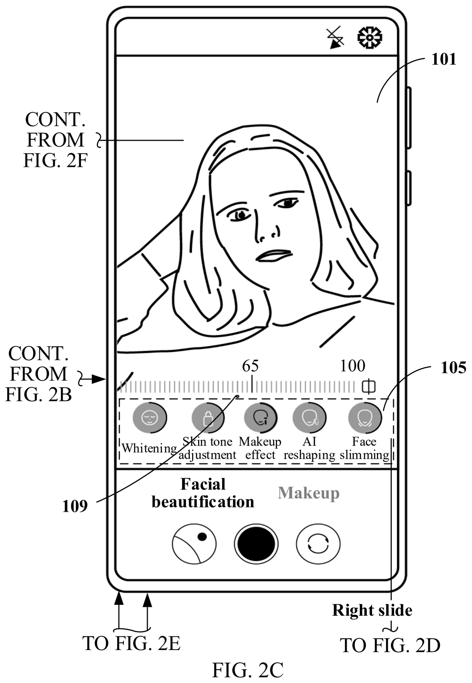

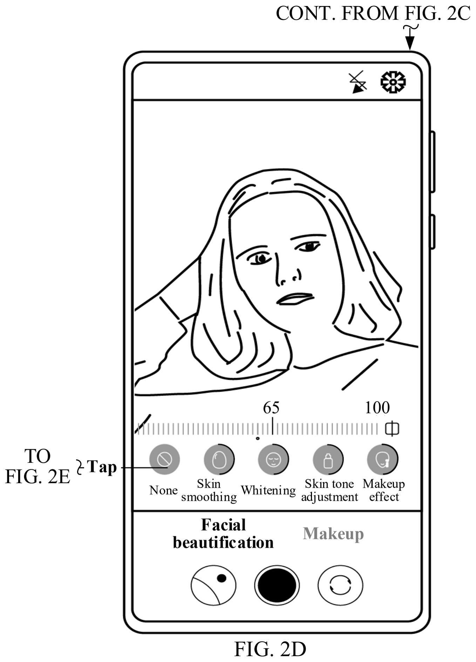

The user inputs the operation of disabling facial beautification, to remove the facial beautification special effect of the image presented in the camera preview interface. For example, as shown in FIG. 2C, the user inputs a right-slide operation at the plurality of facial beautification sub-options 105, to control update and display of the plurality of facial beautification sub-options. As shown in FIG. 2D, a plurality of updated and displayed facial beautification sub-options include the sub-option "none". As shown in FIG. 2D, the user taps the sub-option "none" in the facial beautification sub-options, and the mobile phone disables facial beautification in response to the tapping operation of the user. In some embodiments, facial beautification is disabled, an icon of the sub-option "none" may be in the highlighted state, and the facial beautification special effect of the character in the viewfinder frame is eliminated.

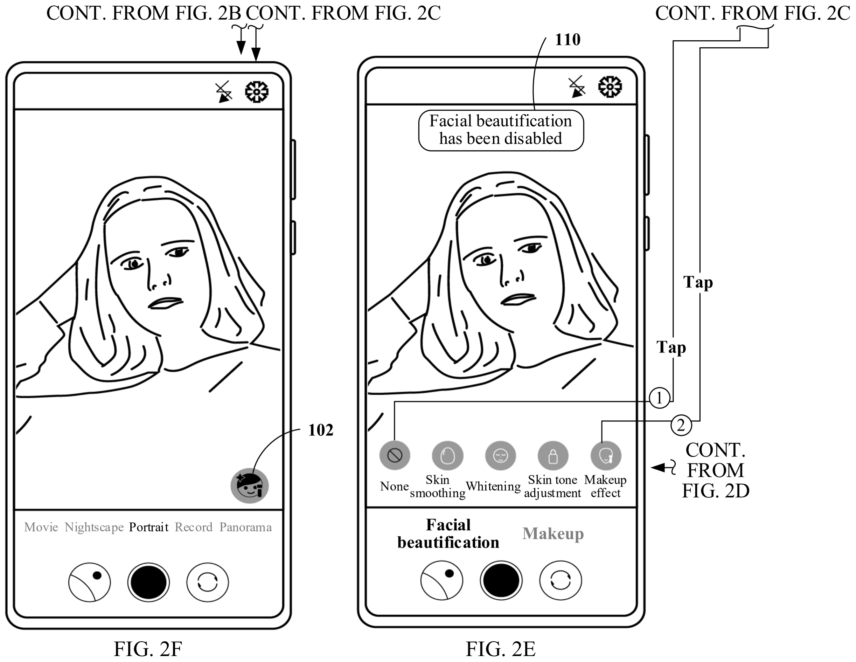

In some embodiments, the viewfinder frame may further display a pop-up window 110 to remind the user that facial beautification is disabled. For example, as shown in FIG. 2E, a text "Facial beautification has been disabled" may be displayed in the pop-up window 110.

In some embodiments, the mobile phone may record an interface that exists before the user performs the operation of disabling facial beautification, and present a recorded interface after the user enables again the facial beautification sub-option to which the interface belongs. After the user disables facial beautification, the user enables the recorded facial beautification sub-option again, and the mobile phone may display the recorded interface.

For example, before the user disables facial beautification, the camera preview interface of the facial beautification function displayed on the mobile phone is shown in FIG. 2C. As shown in FIG. 2E, after facial beautification is disabled, the user may input two operations to enable the makeup effect sub-option of facial beautification again. The first operation is that the user taps the sub-option "none", as shown in (1) in FIG. 2E. The second operation is that the user taps the makeup effect sub-option, as shown in (2) in FIG. 2E. After the user inputs the first operation or the second operation, the mobile phone displays, in response to the tapping operation of the user, the camera preview interface of the facial beautification function before facial beautification is disabled, that is, displays the camera preview interface of the facial beautification function shown in FIG. 2C.

If the user taps another facial beautification sub-option shown in FIG. 2E, for example, the sub-option "whitening", the mobile phone displays a camera preview interface corresponding to the selected sub-option "whitening". Because the mobile phone does not record an input operation of the user in the camera preview interface corresponding to the sub-option "whitening", in the camera preview interface corresponding to the selected sub-option "whitening" and displayed by the mobile phone, a facial beautification special effect corresponding to "whitening" is added to a character displayed in the viewfinder frame, a scale bar of the sub-option "whitening" is displayed in the viewfinder frame, a default value of the sub-option "whitening" is displayed in the scale bar, and an icon of the sub-option "whitening" is in the highlighted state, and is displayed in the center of the plurality of facial beautification sub-options.

In some embodiments, after facial beautification is disabled, the user enables facial beautification again, for example, selects any facial beautification sub-option, or taps the sub-option "none" again, the pop-up window may be further displayed in the camera preview interface of the facial beautification function displayed on the mobile phone, to remind that facial beautification is enabled.

The setting option of the facial beautification function may not be automatically minimized, and the user may input the tapping operation in a non-control area of the viewfinder frame, to minimize the setting option of the facial beautification function, that is, close the setting interface of the facial beautification function (which may also be referred to as the camera preview interface of the facial beautification function). For example, as shown in (b) or FIG. 2C, the user taps a blank area of the viewfinder frame 101, in response to the tapping operation of the user, the mobile phone closes the camera preview interface of the facial beautification function, and displays a camera preview interface in the portrait mode, as shown in FIG. 2F, that is, an entrance interface of the facial beautification and makeup function. The camera preview interface of the facial beautification function is minimized as the facial beautification and makeup button 102.

In some embodiments, the mobile phone may also record an interface that exists before the user inputs an operation of minimizing the facial beautification function, and present a recorded interface after the user enables the facial beautification function again. For example, the user inputs an operation of minimizing the setting option of the facial beautification function in an interface shown in FIG. 2B, the user taps the facial beautification and makeup button 102 in the interface shown in FIG. 2F, and the mobile phone may display the interface shown in FIG. 2B. The user inputs the operation of minimizing the setting option of the facial beautification function in an interface shown in FIG. 2C, and the user taps the facial beautification and makeup button 102 in the interface shown in FIG. 2F. The mobile phone may display the interface shown in FIG. 2C.

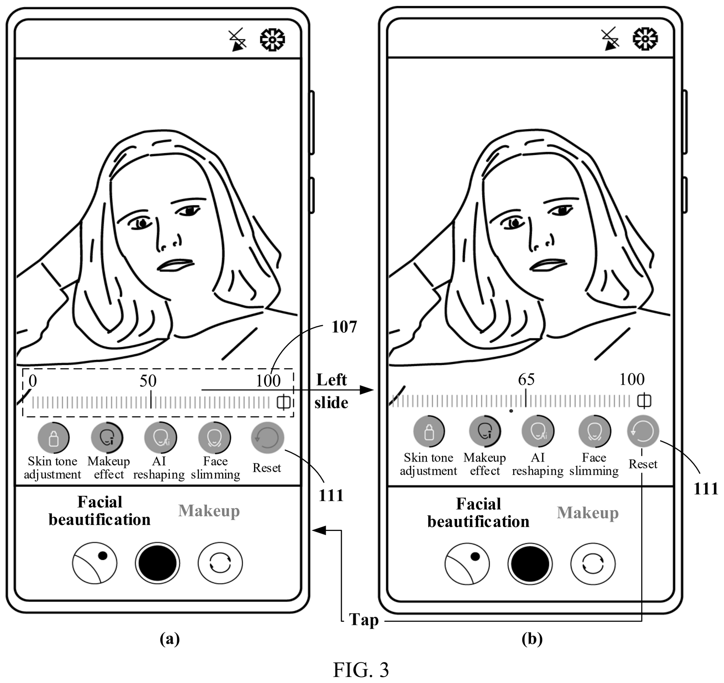

In some embodiments, the camera preview interface of the facial beautification function may further include a reset button, and the reset button may provide the user with a one-tap function of restoring the default value of the facial beautification sub-option. For example, in a camera preview interface of the facial beautification function shown in (a) in FIG. 3, a reset button 111 is displayed in the viewfinder frame.

In some embodiments, the user selects the sub-option "none" to disable facial beautification, or the user selects any facial beautification sub-option other than the sub-option "none", and the default value is displayed in the scale bar of the facial beautification sub-option. The reset button is usually not valid, the user taps the reset button without receiving a response, and an icon of the reset button may be further grayed out. The user adjusts the scale bar of the facial beautification sub-option to display a non-default value, and the reset button is activated to be in an operable state.

For example, in the camera preview interface of the facial beautification function shown in (a) in FIG. 3, a makeup effect sub-option is in the selected state, the default value of 50 is displayed in the scale bar 107, and the reset button 111 is grayed out. After the user inputs the left-slide operation at the scale bar 107, the mobile phone displays an interface shown in (b) in FIG. 3. In the interface, the non-default value of 65 is displayed in the scale bar 107, and the reset button 111 is activated to be in the operable state. As shown in (b) in FIG. 3, the user taps the reset button 111, and the mobile phone may display an interface of the default value of the facial beautification sub-option, that is, the interface shown in (a) in FIG. 3.

It should be noted that, the reset button 111 is usually located at a tail of the plurality of facial beautification sub-options. In a state in which the mobile phone displays the reset button, the user selects a facial beautification sub-option, an icon of the facial beautification sub-option is in the highlighted state, but the facial beautification sub-option is not displayed in the center. For example, in the interfaces shown in (a) and (b) in FIG. 3, the makeup effect sub-option is in the selected state, and an icon of the makeup effect sub-option is highlighted, but is not displayed in the center.

In some embodiments, a scale bar of the sub-option "facial beautification skin tone adjustment" includes a scale interval from cool to warm tones, the cool tone refers to the first scale value, and the warm tone refers to the last scale value. For example, the cool tone may refer to a scale value of -50, the warm tone may refer to a scale value of 50, a default value of the sub-option "skin tone adjustment" is 0, which belongs to a base skin color, and an icon of the sub-option "skin tone adjustment" is displayed without an outer circle. The user adjusts the scale bar to move to the warm tone, the scale value is displayed as a value from 0 to 50, and an icon edge of the sub-option "skin tone adjustment" is displayed with an outer circle clockwise. The user adjusts the scale bar to move to the cool tone, the scale value is displayed as a value from -50 to 0, and an icon edge of the sub-option "skin tone adjustment" is displayed with an outer circle anticlockwise.

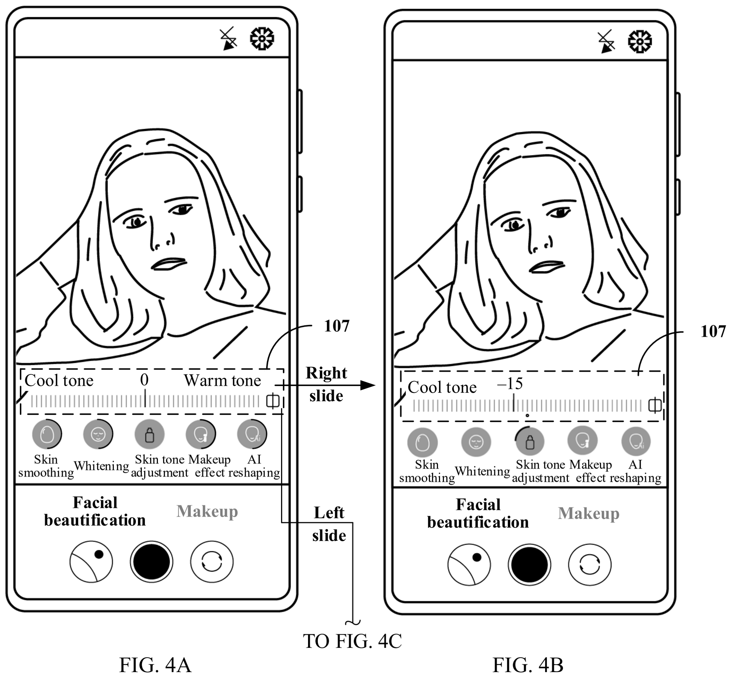

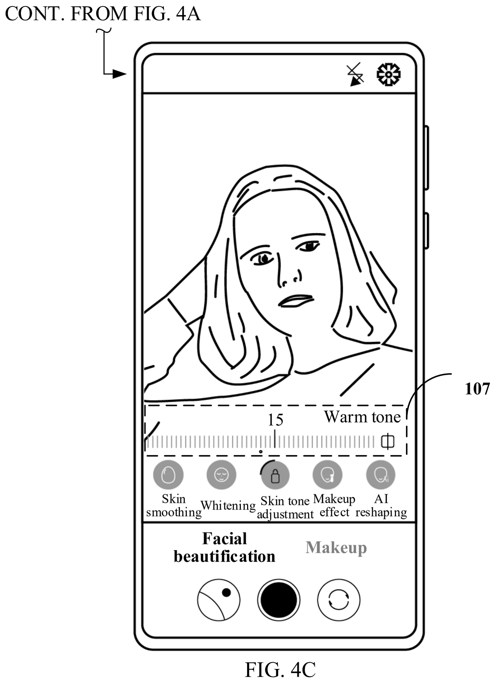

For example, as shown in FIG. 4A, the sub-option "skin tone adjustment" is in the selected state, and the default value of 0 is displayed in the scale bar 107 of the sub-option "skin tone adjustment". The user inputs a right-slide operation at the scale bar 107, and the mobile phone displays an interface shown in FIG. 4B. In the interface, the scale bar 107 displays a non-default value of -15, a dot is displayed at the bottom of the default value to indicate a position of the default value in the scale bar, and the icon edge of the sub-option "skin tone adjustment" is displayed with the outer circle anticlockwise. The user inputs the left-slide operation at the scale bar 107, and the mobile phone displays an interface shown in FIG. 4C. In the interface, a non-default value of 15 is displayed in the scale bar 107, a dot is displayed at the bottom of the default value to indicate a position of the default value in the scale bar, and the icon edge of the sub-option "skin tone adjustment" is displayed with the outer circle clockwise.

In some embodiments, after the mobile phone enables the facial beautification function, the user may input an operation to control the mobile phone to close the camera preview interface of the facial beautification function, and display another interface. For example, the operation that is input by the user may include an operation of switching between a front-facing camera and a rear-facing camera, an operation of switching displaying images of a gallery application, an operation of terminating background processes, or an operation of invoking a setting interface of the camera application. In some embodiments, the mobile phone may also record an interface that exists before the user inputs the operation of minimizing the facial beautification function, and present a recorded interface after the user enables the facial beautification function again.

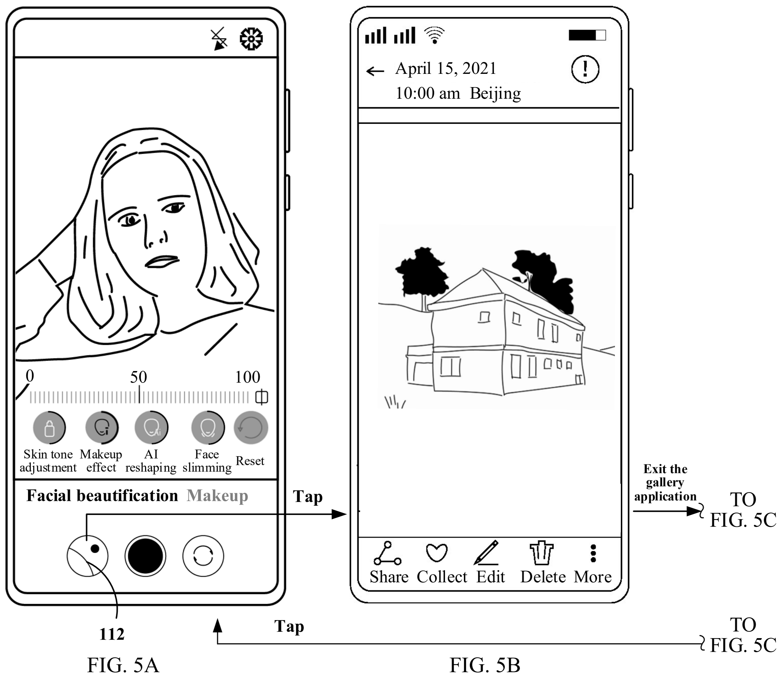

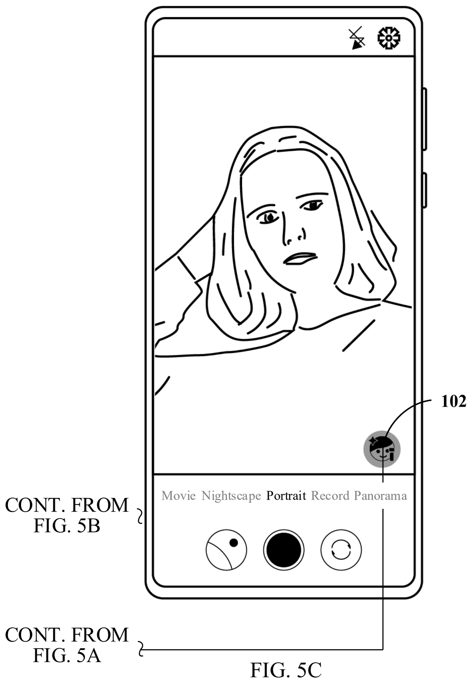

For example, FIG. 5A shows a camera preview interface of the facial beautification function. In the interface, a makeup effect sub-option is in the selected state. The user taps a button 112, and the button 112 links the gallery application. In response to the tapping operation of the user, the mobile phone closes the camera preview interface of the facial beautification function, and displays an image browsing interface shown in FIG. 5B. An image in the image browsing interface is an image saved in the gallery application. The user inputs an exit operation (for example, taps a return control at an upper left corner of the interface in FIG. 5B, or a slide operation on a side of a mobile phone interface) in the image browsing interface, and the mobile phone displays the camera preview interface in the portrait mode shown, as in FIG. 5C. The interface displays the facial beautification and makeup button 102. The user taps the facial beautification and makeup button 102, and the mobile phone displays the camera preview interface of the facial beautification function shown in FIG. 5A.

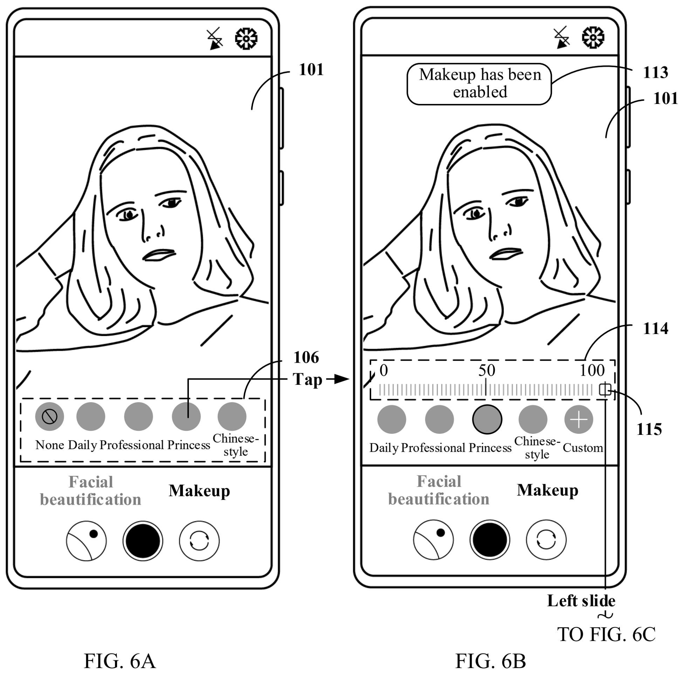

In some embodiments, after the mobile phone enables the makeup function, the user may also input a plurality of operations in the camera preview interface of the makeup function. For example, FIG. 6A to FIG. 6D show interface diagrams corresponding to an operation of selecting a makeup sub-option by the user, an operation of adjusting a scale value of a makeup sub-option to adjust a makeup degree, and an operation of minimizing a setting option of the makeup function.

The user selects a makeup sub-option, to add a makeup look corresponding to the sub-option to the image presented in the camera preview interface. For example, as shown in FIG. 6A, the user taps the sub-option "princess" in the plurality of makeup sub-options 106. In response to the tapping operation of the user, the mobile phone adds a makeup look corresponding to the sub-option "princess" to the character displayed in the viewfinder frame 101, displays a scale bar 114 of the sub-option "princess" in the viewfinder frame 101, and further controls the makeup sub-option to be in the selected state, as shown in FIG. 6B.

In some embodiments, an icon of the makeup sub-option in the selected state is in the highlighted state, and is displayed in the center of the plurality of makeup sub-options.

For example, the first and last scale values (0 and 100) of a scale interval from 0 to 100 and a plurality of scale marks are displayed in the scale bar 114, and each scale mark may indicate one scale value in the scale interval from 0 to 100. The first scale value indicates the lightest makeup look, and may be usually understood as no makeup look, and the last scale value indicates the strongest makeup look.

For another example, the user selects the sub-option "princess", and a default value of the sub-option "princess", for example, a middle scale value (50) is further displayed in the scale bar 114 of the sub-option "princess" displayed in the viewfinder frame 101.

In some embodiments, the user selects any makeup sub-option other than the sub-option "none", and a pop-up window 113 may further be displayed in the viewfinder frame 101 to remind the user that makeup is enabled. For example, as shown in FIG. 6B, a text "Makeup has been enabled" may be displayed in the pop-up window 113.

In some other embodiments, after the user selects any makeup sub-option other than the sub-option "none", the user selects the sub-option "none" to disable the makeup, and the pop-up window may further be displayed in the viewfinder frame 101 to remind the user that makeup is disabled. For example, a text "Makeup has been disabled" may be displayed in the pop-up window.

The user may input the slide operation at the scale bar 114, to display the scale value in a sliding manner. In some embodiments, through a left-slide operation of the user, the middle scale value displayed in the scale bar 114 is updated to a scale value between the middle scale value to the last scale value, and through a right-slide operation of the user, the middle scale value displayed in the scale bar 114 is updated to a scale value from the first scale value to the middle scale value. In some embodiments, a slide distance corresponding to the slide operation may indicate an updated value of the middle scale value displayed in the scale bar 114. Intensity of the entire makeup look of the character in the viewfinder frame 101 may be further adjusted through a slide operation that is input by the user at the scale bar 114.

In some embodiments, the comparison button 115 is further displayed in the scale bar 114. The user may tap the comparison button 115, to remove the makeup look from the character displayed in the viewfinder frame 101. In this way, the user may conveniently view an image to which the makeup look is added and an image to which the makeup look is not added, and compare a difference between the two images.

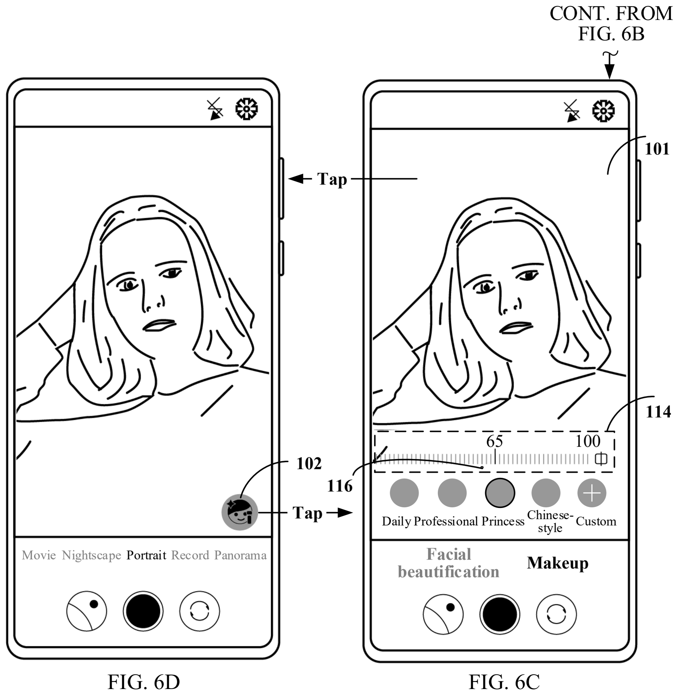

For example, as shown in FIG. 6B, the user inputs a left-slide operation at the scale bar 114, and in response to the left-slide operation of the user, the mobile phone displays, in the scale bar 114, a scale value of 65 indicated by a slide distance corresponding to the left-slide operation. To facilitate viewing, by the user, a position of the default value of the makeup sub-option in the scale bar, a default value mark may be further displayed at the bottom of the default value in the scale bar 114. For example, a dot 116 shown in FIG. 6C is the default value mark.

Alternatively, the setting option of the makeup function may not be automatically minimized, and the user may input a tapping operation in a non-control area of the viewfinder frame, to minimize the setting option of the makeup function, that is, close the camera preview interface of the makeup function (which is also referred to as the setting interface of the makeup function). For example, as shown in FIG. 6C, the user taps a blank area of the viewfinder frame 101. In response to a tapping operation of the user, the mobile phone closes the camera preview interface of the makeup function, and displays a camera preview interface in the portrait mode, as shown in FIG. 6D, that is, an entrance interface of the makeup function. The setting option of the makeup function is minimized as the makeup button 102.

In some embodiments, the mobile phone may also record an interface that exists before the user inputs an operation of minimizing the setting option of the makeup function, and present a recorded interface after the user enables the makeup function again. For example, the user inputs the operation of minimizing the setting option of the makeup function in an interface shown in FIG. 6C, and the user taps the makeup button 102 in an interface shown in FIG. 6D. The mobile phone may display the interface shown in FIG. 6C.

In some embodiments, the camera preview interface of the makeup function may further include a custom button, which may provide the user with a function of creating a customized makeup look.

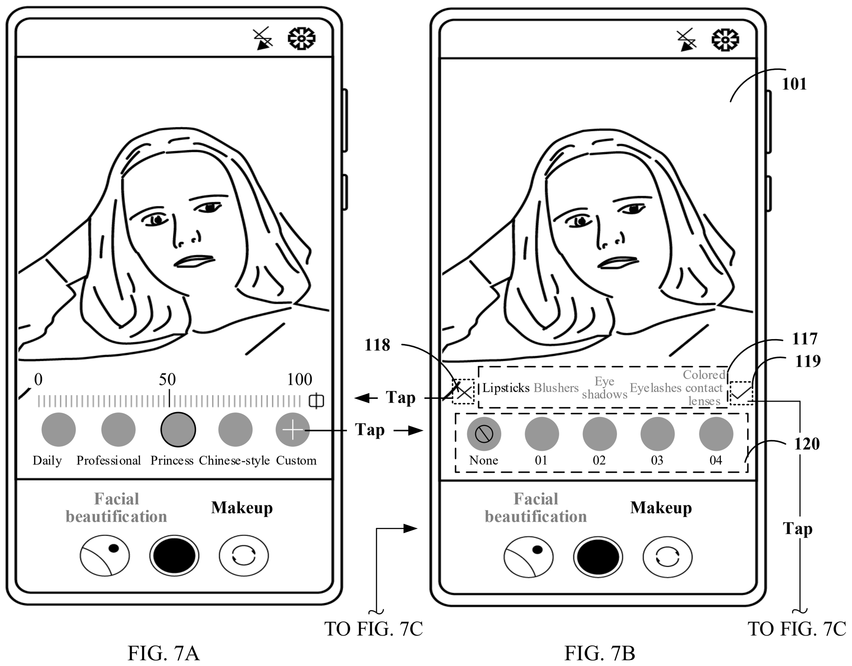

For example, in a camera preview interface of the makeup function shown in FIG. 7A, the custom button is located at a tail of the plurality of makeup sub-options. As shown in FIG. 7A, the user taps the custom button, and the mobile phone displays a makeup creation interface in response to a tapping operation of the user. For example, FIG. 7B shows a makeup creation interface. The viewfinder frame 101 of the makeup creation interface includes a plurality of makeup elements 117, a close button 118, and a save button 119. The close button 118 is used to close the makeup creation interface, and the save button 119 is configured to save a makeup look created by the user.

For example, the plurality of makeup elements may include lipsticks, eye shadows, eyelashes, colored contact lenses, blushers, eyebrows, and contouring. The makeup element may be understood as an element included in the makeup.

In the camera preview interface of the makeup function shown in FIG. 7A, the sub-option "princess" is in the selected state, and the scale bar of the sub-option "princess" is displayed in the camera preview interface of the makeup function. In the camera preview interface of the makeup function shown in FIG. 7A, none of the sub-options of the makeup function is in the selected state. Correspondingly, the scale bar is not displayed in the camera preview interface of the makeup function, and only sub-options of the makeup function and the custom button are displayed. The user may also tap the custom button, and the mobile phone may display a makeup creation interface shown in FIG. 7B in response to a tapping operation of the user.

In some embodiments, each makeup element may also be selected by the user. After the makeup element is selected, the viewfinder frame 101 further includes a plurality of options 120, and the plurality of options 120 are a plurality of options 120 of the makeup element selected by the user. For example, some options of lipsticks are shown in FIG. 7B, some options of lipsticks that are not displayed are hidden, and the user may control the mobile phone to display the hidden options of lipsticks through the slide operation. In some embodiments, each makeup element is set to "none" by default, that is, an option "none" of each makeup element is in the selected state.

In some embodiments, the user may input the slide operation at the makeup elements 117, to display the plurality of makeup elements in a sliding manner. For example, FIG. 7B shows some makeup elements, makeup elements that are not displayed are hidden, and the user may control the mobile phone to display the hidden makeup elements through the slide operation.

The user may tap the close button 118, and in response to a tapping operation of the user, the mobile phone displays a previous-level interface of the makeup creation interface, that is, the interface shown in FIG. 7A. A previous-level interface of the makeup creation interface may be understood as an entry interface of the makeup creation interface. The user taps the custom button in the camera preview interface in which none of the sub-options of the makeup function is in the selected state, and the mobile phone displays the makeup creation interface shown in FIG. 7B. The user taps the close button 118, and the mobile phone displays the camera preview interface in which none of the sub-options of the makeup function is in the selected state.

The user may further select the makeup element in the makeup creation interface shown in FIG. 7B, and select an option of the makeup element, to create a make-up look. After completing creation of the makeup look, the user may tap the save button 119, and in response to a tapping operation of the user, the mobile phone saves the makeup look created by the user, and displays an interface of the makeup look created by the user.

It should be noted that, in a process in which the user creates the makeup look, the user selects the option "none" of each makeup element, and after the user taps the save button 119, the mobile phone may also save the makeup look created by the user. Certainly, the makeup look is a face without makeup.

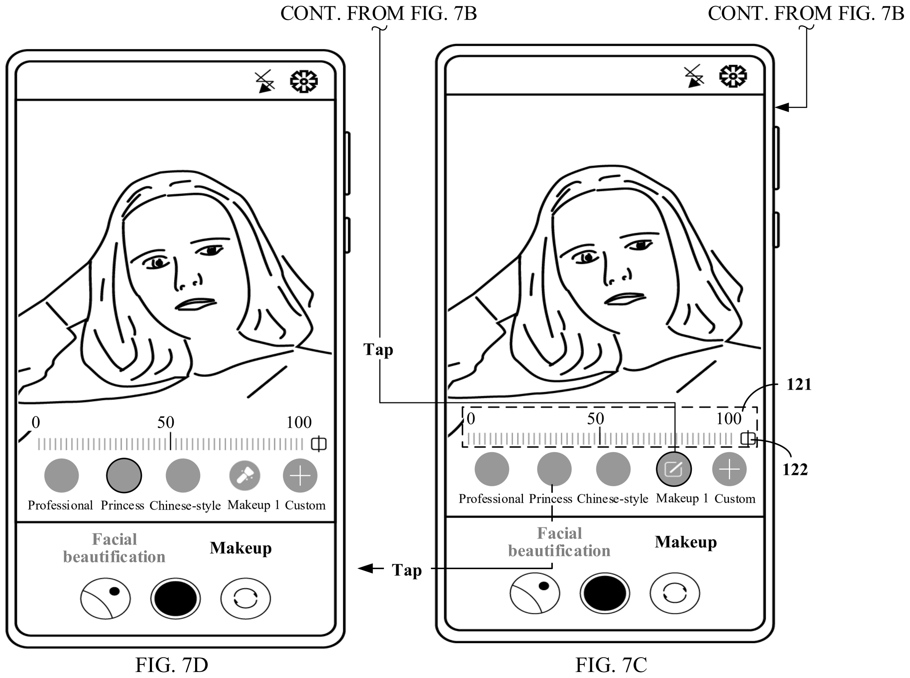

For example, FIG. 7C shows the interface of the makeup look created by the user. In the interface, the makeup look saved by the mobile phone is named a makeup 1, the makeup 1 may be usually located at the tail of the plurality of makeup sub-options, the makeup 1 is in the selected state, an icon of the makeup 1 is highlighted, and the icon is in an editable state. The interface further displays a scale bar 121 of the makeup 1. For example, the first and last scale values (0 and 100) of a scale interval from 0 to 100 and a plurality of scale marks are displayed in the scale bar 121, and each scale mark may indicate one scale value in the scale interval from 0 to 100. Generally, the makeup look created by the user may correspond to a scale value within the scale interval from 0 to 100, and the scale value is a default value of the makeup 1, for example, a scale value of 50 shown in FIG. 7C.

In some embodiments, the user may also input the slide operation at the scale bar 121, to implement sliding display of the scale value and adjust a thick-light level of the entire makeup look of the character in the viewfinder frame. To facilitate viewing, by the user, a position of the default value of the makeup 1 in the scale bar, after the user inputs the slide operation at the scale bar 121, a default value mark such as a dot may be displayed at the bottom of the default value at the scale bar 121.

In some embodiments, a manner in which the mobile phone adjusts the intensity of the entire makeup look of the character in the viewfinder frame in response to the slide operation that is input by the user at the scale bar 121 may be adjusting a value corresponding to the entire makeup look of the character based on a weight. If the entire makeup look of the character is adjusted to be heavy, the weight is greater than 1, and if the entire makeup look of the character is adjusted to be light, the weight is less than 1.

In some embodiments, a comparison button 122 is further displayed in the scale bar 21. The user may tap the comparison button 122, to remove a makeup look of the makeup 1 from the character displayed in the viewfinder frame. In this way, the user may conveniently view an image to which the makeup look is added and an image to which the makeup look is not added, and compare a difference between the two images.

As shown in FIG. 7C, the user taps the makeup 1 in the selected state, and the mobile phone displays the makeup creation interface shown in FIG. 7B in response to a tapping operation of the user. The makeup look of the makeup 1 is displayed in the makeup creation interface, that is, in a plurality of options of each makeup element of the makeup 1, an option selected by the user when the user creates a makeup look 1 is in the selected state. The user may further adjust a selected option of the makeup element in the makeup creation interface, to adjust the makeup look of the makeup 1. After completing adjustment of the makeup look of the makeup 1, the user taps the save button 119, and the mobile phone updates and saves the makeup look of the makeup 1.

The user switches to select another makeup sub-option, and a state of an icon of the makeup 1 may be adjusted, that is, an icon of the customized makeup 1 is changed. For example, after the user taps the sub-option "princess" in the interface shown in FIG. 7C, in response to a tapping operation of the user, the mobile phone displays an interface shown in FIG. 7D. The interface is an interface of the sub-option "princess", the sub-option "princess" is in the selected state, an icon of the sub-option "princess" is highlighted, and a scale bar of the sub-option "princess" is displayed in the viewfinder frame. The icon of the makeup 1 is changed, and is displayed as a default icon shown in FIG. 7D. Because the makeup 1 is not in the selected state, the icon of the makeup 1 is in an uneditable state.

The icon shown in FIG. 7D may be understood as a default icon of the customized makeup look. In some embodiments, after creating the customized makeup look, the user may further modify the default icon in a process of saving the customized makeup look. For example, as shown in FIG. 7B, the user completes creation of the customized makeup look and taps the save button. In response to a tapping operation of the user, the mobile phone displays a pop-up window in the makeup creation interface. The pop-up window includes prompt information for creating an icon, a cancel button, and a confirm button. The cancel button is used to cancel creation of a new icon. The confirm button is used to display a camera preview interface in a photographing mode, to remind the user to photograph an image to obtain a new icon.

The user taps the confirm button, and the mobile phone displays the camera preview interface in the photographing mode. When detecting that the user taps a photograph button in the camera preview interface in the photographing mode, the mobile phone obtains an image photographed by the camera, crops the image, and saves the image, to obtain the icon of the customized makeup look. The icon of the customized makeup look may replace the default icon, and is used as the icon of the makeup 1 in FIG. 7D.

In some embodiments, the mobile phone may support creation of a plurality of customized makeups. For example, the mobile phone supports creation of five customized makeups, and after the mobile phone saves the five customized makeups created by the user, a customized entrance may be closed, that is, the custom button in the camera preview interface of the makeup disappears.

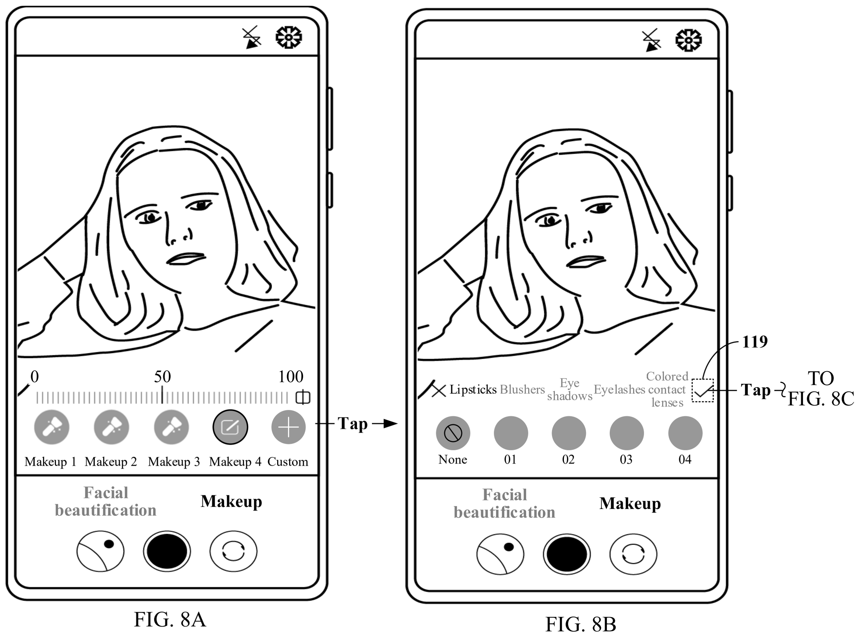

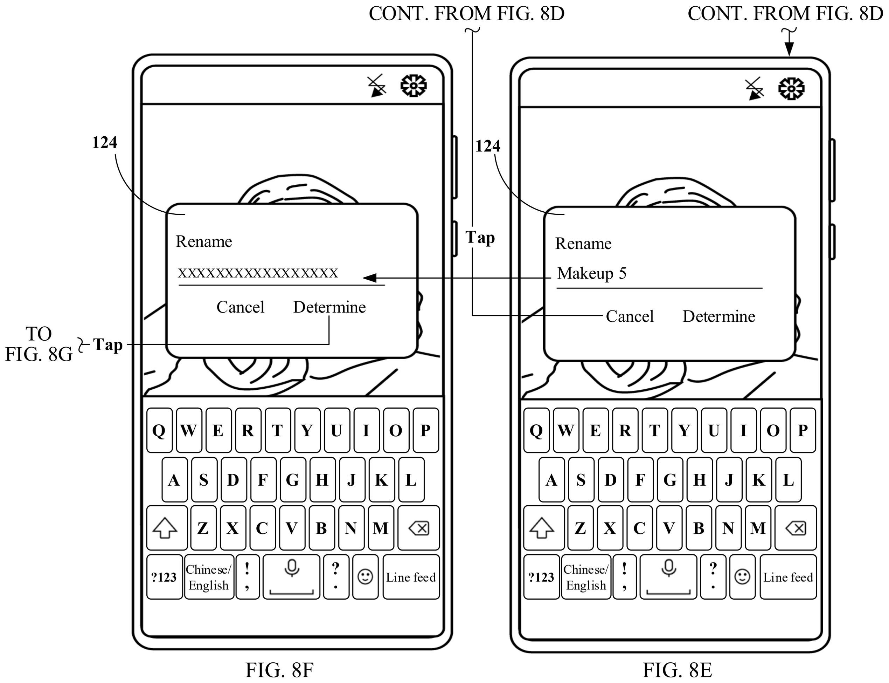

For another example, FIG. 8A to FIG. 8G show interface diagrams of the user creating the last customized makeup and an interface diagram of the user changing a name of the customized makeup.

As shown in FIG. 8A, the mobile phone saves four customized makeups, which are respectively named a makeup 1 to a makeup 4. Because the makeup 4 is in the selected state, an icon of the makeup 4 is highlighted and is in the editable state, a scale bar of the makeup 4 is displayed in the viewfinder frame, and icons of the makeup 1 to the makeup 3 are in the uneditable state. The user taps the custom button, as shown in FIG. 8A, and the mobile phone displays the makeup creation interface, as shown in FIG. 8B.

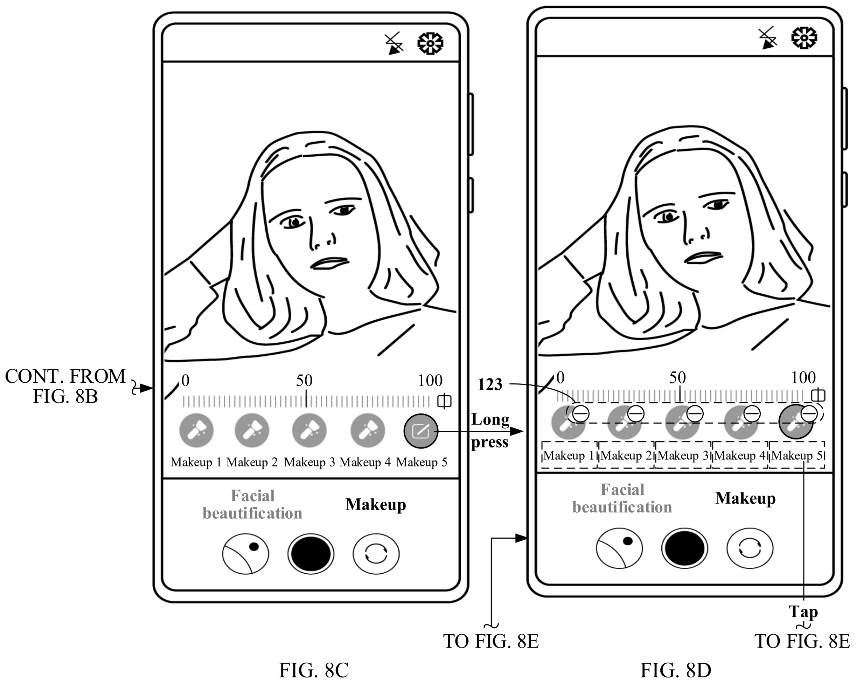

After inputting an operation in the makeup creation interface to create a new makeup look, the user taps the save button 119, and in response to a tapping operation of the user, the mobile phone saves the makeup look and displays an interface shown in FIG. 8C. In the interface, the custom button disappears, an icon of a makeup 5 is displayed, the icon is highlighted and is in the editable state, and a scale bar of the makeup 5 is further displayed in the interface. A default scale value of the makeup 5 may also be 50.

In some embodiments, default values of makeups of different makeup looks created by the user may be a same value or different values. The mobile phone may configure, based on intensity of a makeup look created by the user, a default value of the makeup look. If the makeup look is light, the default value is small, or if the makeup look is heavy, the default value is large.

As shown in FIG. 8C, the user long-presses the icon of the makeup 5, and as shown in FIG. 8D, in response to a long-press operation of the user, the mobile phone displays a camera preview interface of the makeup function in the editable state. In the interface, the makeup 1 to the makeup 5 are all in the editable state, a delete button 123 is displayed at an upper right corner of icons of the makeup 1 to the makeup 5, and names of the makeup 1 to the makeup 5 are in the editable state. The delete button 123 is used to control to delete the makeup saved in the mobile phone. Because the makeup 5 is in the selected state, the icon of the makeup 5 is highlighted, and the scale bar of the makeup 5 is displayed in the interface.

The makeup 5 shown in FIG. 8C is in the selected state, and in response to an operation of tapping the icon of the makeup 5, the mobile phone displays the camera preview interface of the makeup function in the editable state. Certainly, the user taps an icon of a makeup that is not in the selected state, for example, any one of the makeup 1 to the makeup 4 shown in FIG. 8C, and the mobile phone may also display the camera preview interface of the makeup function in the editable state. None of the makeup 1 to the makeup 5 in the camera preview interface of the makeup function in the editable state is in the selected state, and no scale bar is displayed in the camera preview interface of the makeup function in the editable state shown in FIG. 8D. Certainly, the user may alternatively select the icon of the makeup 5 in the camera preview interface of the makeup function in the editable state, and the mobile phone displays the camera preview interface of the makeup function in the editable state shown in FIG. 8D.

In some embodiments, none of the makeup 1 to the makeup 5 in FIG. 8C is in the selected state. The user long presses an icon of a makeup, for example, the icon of the makeup 5, and the mobile phone displays the camera preview interface of the makeup function in the editable state shown in FIG. 8D, that is, the makeup 5 is automatically selected in the camera preview interface of the makeup function in the editable state.

The user may change a name of the makeup by tapping the name of the makeup. For example, as shown in FIG. 8D, the user taps the name of the makeup 5. In response to a tapping operation of the user, the mobile phone invokes an input method to run, displays a keyboard of the input method in the camera preview interface of the makeup function in the editable state, and may further display a pop-up window 124 to provide the user with an operation area for changing a name. For example, as shown in FIG. 8E, the pop-up window 124 includes a text "Rename", the name of the makeup 5, the cancel button, and the confirm button. The cancel button is used to exit the editing state of the makeup, and the confirm button is used to control the mobile phone to correct the name of the makeup.

The user taps the cancel button, as shown in FIG. 8E, and the mobile phone displays a previous-level interface of the camera preview interface of the makeup function in the editable state, that is, the interface shown in FIG. 8D.

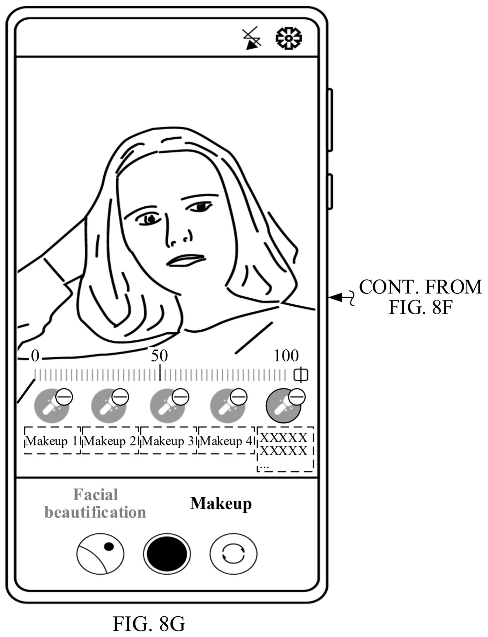

The user deletes the name of the makeup 5. As shown in FIG. 8E, when the user input a new name through the keyboard of the input method, and taps the confirm button, the mobile phone displays the camera preview interface of the makeup function in the editable state. As shown in FIG. 8G, in the interface, the name of the makeup 5 is updated to the name that is input by the user.

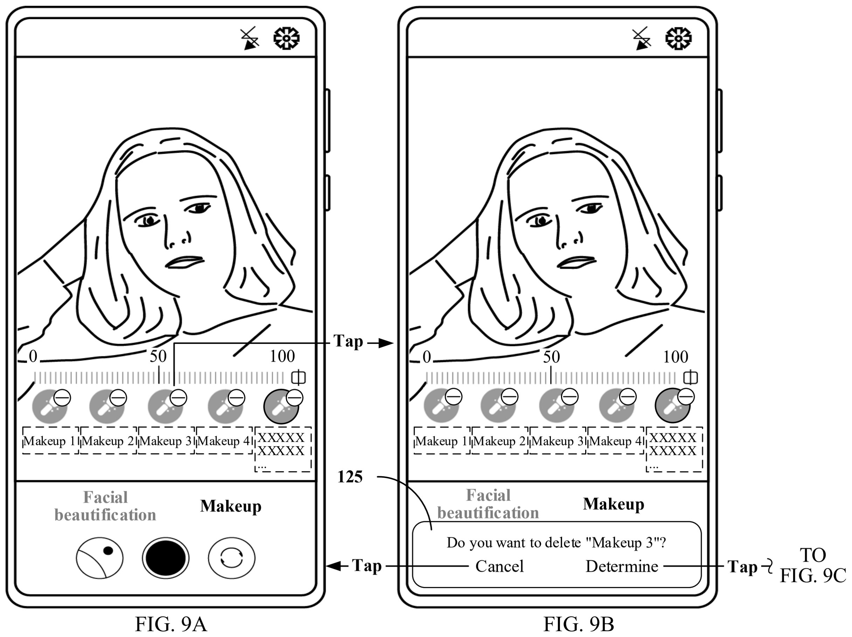

For example, FIG. 9A to FIG. 9E show interface diagrams in which the user deletes a makeup and an interface diagram in which the user creates a new customized makeup again.

As shown in FIG. 9A, the user taps the delete button 123 at an upper right corner of the icon of the makeup 3. As shown in FIG. 9B, in response to a tapping operation of the user, the mobile phone displays a pop-up window 125 in the camera preview interface of the makeup function in the editable state, to remind the user to further correct whether to delete the makeup 3. For example, the pop-up window 125 includes a prompt text "Do you want to delete "makeup 3"?", the cancel button, and the confirm button.

The user taps the cancel button, as shown in FIG. 9B, and the mobile phone deletes the pop-up window 125, to display a previous-level interface of the camera preview interface of the makeup function in the editable state, that is, the interface shown in FIG. 9A.

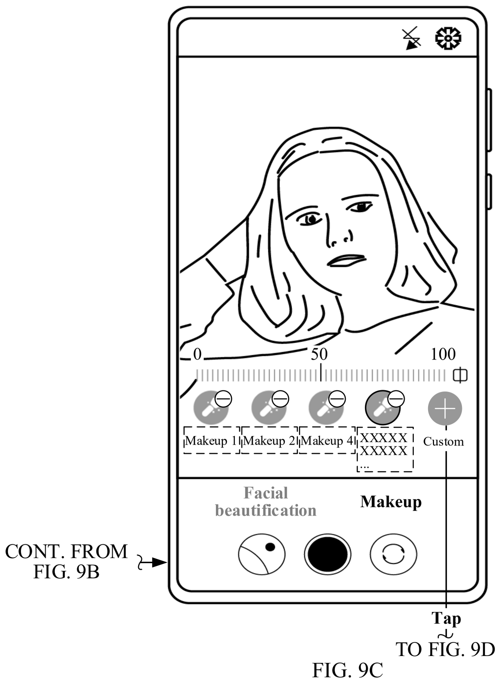

The user taps the confirm button, as shown in FIG. 9B, and the mobile phone deletes the makeup 3, and displays the custom button in the camera preview interface of the makeup function in the editable state. For example, as shown in FIG. 9C, the makeup 3 is deleted, the makeup 4 is moved forward by one position for display, and the custom button is located at a tail of a plurality of makeups.

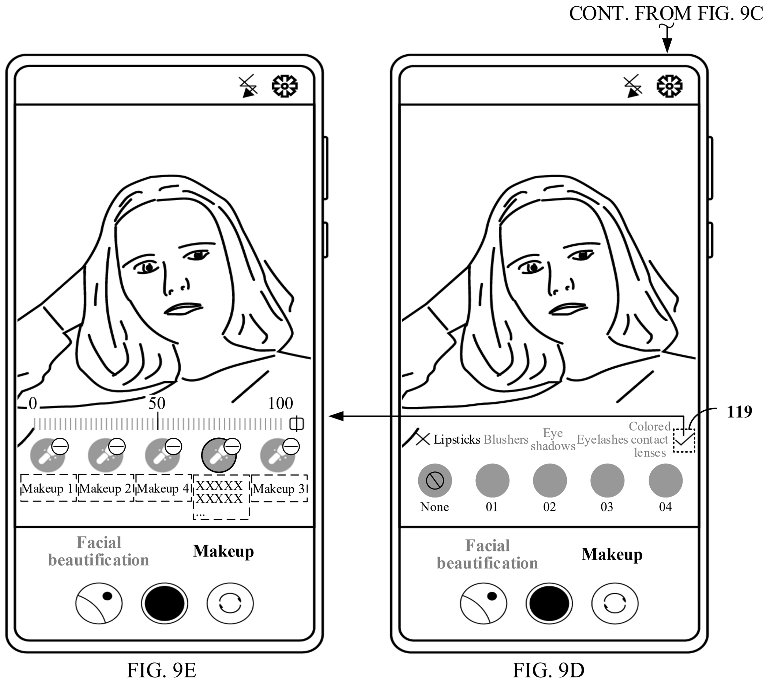

As shown in FIG. 9C, the user taps the custom button to create a new makeup again, and the mobile phone displays a makeup creation interface shown in FIG. 9D in response to a tapping operation of the user.

After inputting an operation in the makeup creation interface to create a new makeup look, the user taps the save button 119, and in response to a tapping operation of the user, the mobile phone saves the makeup look and displays an interface shown in FIG. 9E. In the interface, the custom button disappears. In addition, the previous makeup 3 is deleted, a new makeup look created by the user this time is named the makeup 3, and the makeup 3 is displayed at a tail of a plurality of makeup sub-options.

In some embodiments, a quantity of words that can be displayed for a makeup name is limited. For example, 10 words may be displayed. If the user inputs more than 10 words for the makeup name, only the first 10 words of the makeup name are displayed, and the following words are replaced with three dots.

In some embodiments, after the mobile phone saves five customized makeups created by the user, the user may adjust positions of the five customized makeups, and the user may adjust the positions of the customized makeups by dragging icons of the customized makeups. For example, the makeup 1 to the makeup 5 are arranged in sequence. The user drags the icon of the makeup 3 to a position after the icon of the makeup 1 and before the icon of the makeup 2, and after the user releases the icon of the makeup 3, an arrangement sequence of the makeup 1 to the makeup 5 is adjusted to: the makeup 1, the makeup 3, the makeup 2, the makeup 4, and the makeup 5.

In some embodiments, the plurality of makeup sub-options of the makeup includes the sub-option "men", and a makeup look corresponding to the sub-option "men" is more suitable for a man. Generally, a makeup indicated by the sub-option "men" is enabled by default. In this way, when a man is displayed in the viewfinder frame of the camera preview interface, the mobile phone may add a makeup look corresponding to the sub-option "men" to the man.

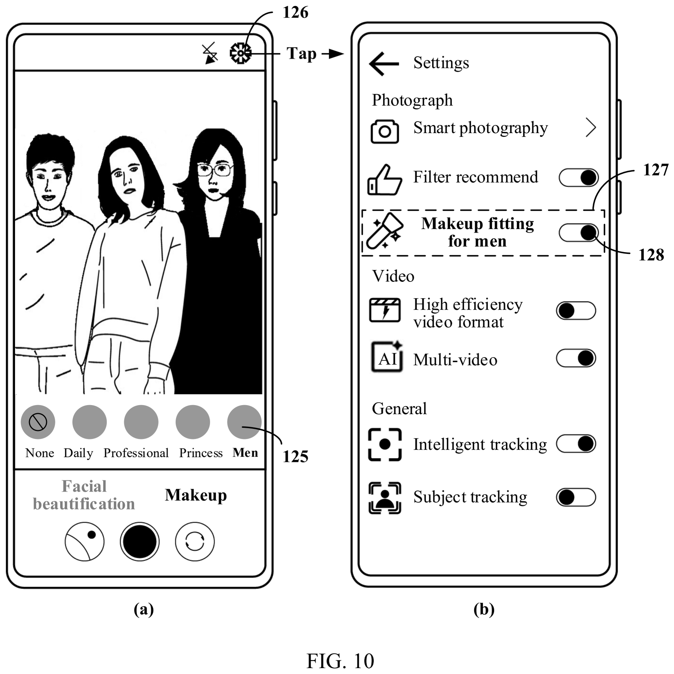

For example, a sub-option "men" 125 is displayed in the camera preview interface of the makeup function shown in (a) in FIG.10. After the user taps a setting button 126, the mobile phone displays a setting interface of the camera. As shown in (b) in FIG. 10, the setting interface of the camera displays an option 127 for makeup fitting for men and a button 128, and the button 128 is in an enabled state. The user may tap the button 128 to disable the option for makeup fitting for men.

It should be noted that, the option for makeup fitting for men is enabled, the user selects a makeup sub-option (not the sub-option "men") in the camera preview interface of the makeup function, and when the mobile phone photographs a man, a makeup look of the man in the viewfinder frame is also a makeup look corresponding to the sub-option "men" rather than a makeup look corresponding to the makeup sub-option selected by the user, and when the mobile phone photographs a woman, a makeup look of the woman is a makeup look corresponding to the makeup sub-option selected by the user.

In some embodiments, after the mobile phone enables the makeup function, the user may input an operation to control the mobile phone to close the camera preview interface of the makeup function, and display another interface. For example, the operation that is input by the user may include the operation of switching between the front-facing camera and the rear-facing camera, the operation of switching displaying images of the gallery application, the operation of terminating background processes, and the operation of invoking the setting interface of the camera application. In some embodiments, the mobile phone may also record an interface that exists before the user inputs an operation of minimizing the setting option of the makeup function, and present a recorded interface after the user enables the makeup function again.

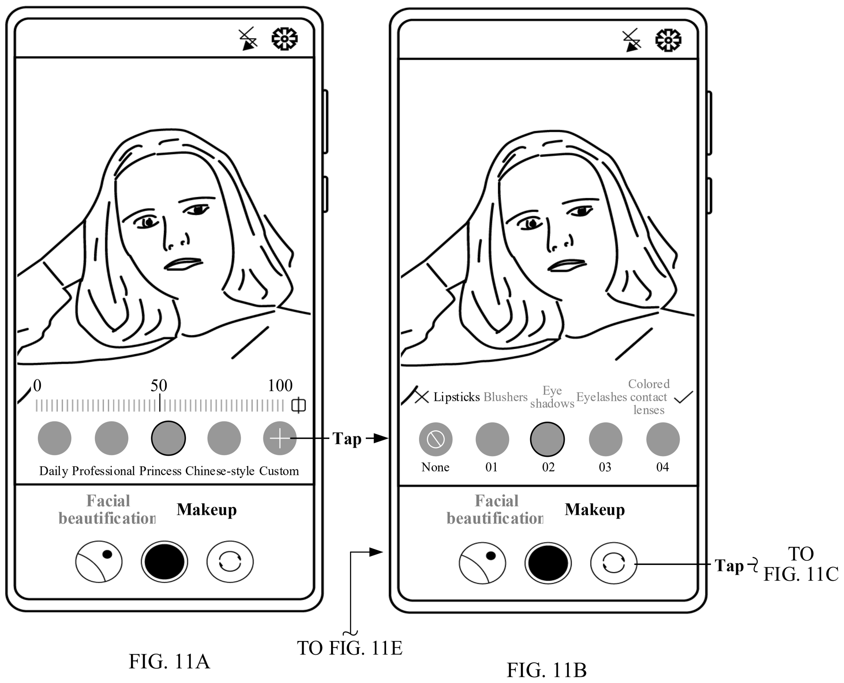

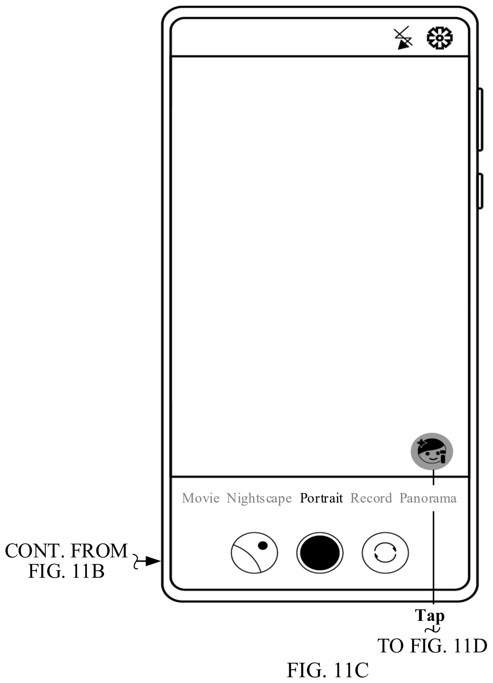

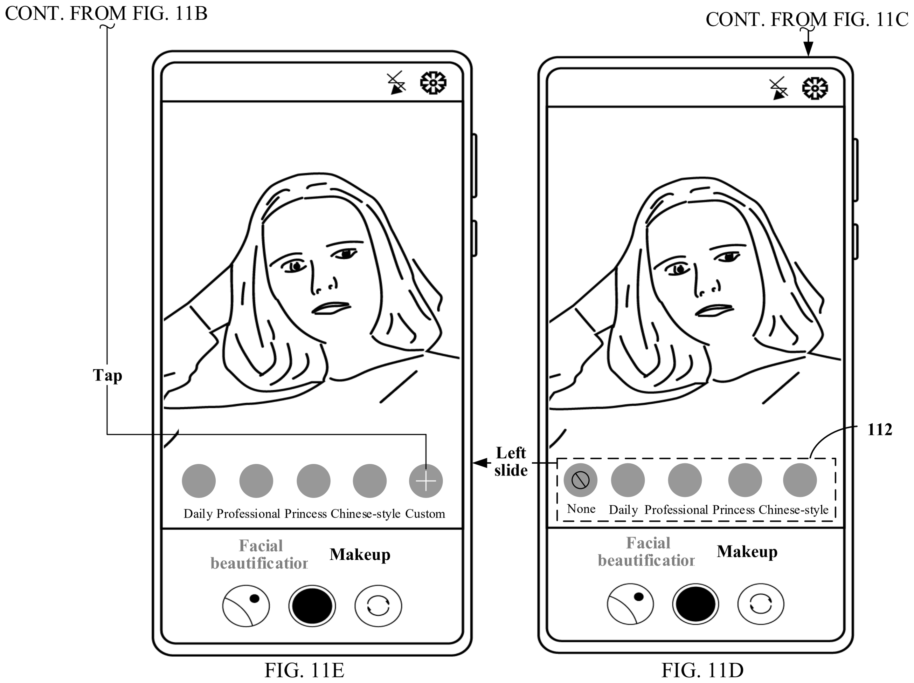

For example, FIG. 11A shows a camera preview interface of the makeup function. The user taps the custom button, the mobile phone displays the makeup creation interface, and the user selects a sub-option 02 of an element "lipsticks" in the makeup creation interface. The user taps a switch button of the front-facing camera and the rear-facing camera in an interface shown in FIG. 11B. In response to a tapping operation of the user, the mobile phone displays a camera preview interface of the front-facing camera. As shown in FIG. 11C, the facial beautification and makeup button is displayed in the interface. The user taps the facial beautification and makeup button, as shown in FIG. 11C, and the mobile phone displays the camera preview interface of the makeup function, as shown in FIG. 11D. The user inputs a left-slide operation at a makeup sub-option 112, and as shown in FIG. 11E, the mobile phone displays a camera preview interface of another makeup function. The custom button is displayed in the interface. The user taps the custom button, and the mobile phone displays an interface recorded by the mobile phone, that is, the interface shown in FIG. 11B.

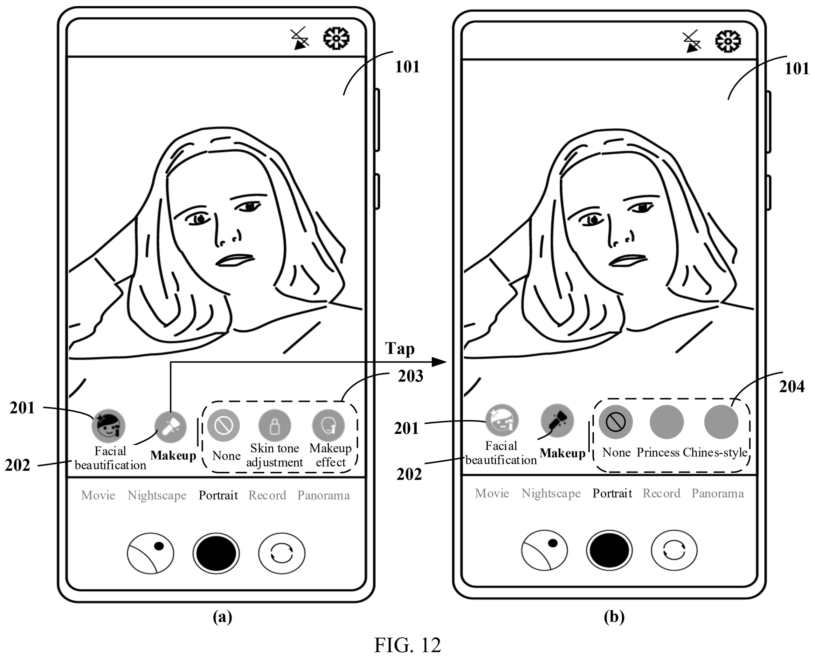

FIG. 11C and FIG. 11D show the camera preview interface of the facial beautification function and the camera preview interface of the makeup function. However, the camera preview interface of the facial beautification function and the camera preview interface of the makeup function are not limited thereto. FIG. 12 shows another camera preview interface of the facial beautification function and another camera preview interface of the makeup function.

(a) in FIG. 12 shows the camera preview interface of the facial beautification function, and (b) in FIG. 12 shows the camera preview interface of the makeup function. As shown in (a) in FIG. 12, in the camera preview interface of the facial beautification function, the viewfinder frame 101 includes a facial beautification button 201 and a makeup button 202. The facial beautification button 201 is in the selected state, and the makeup button 202 is in the non-selected state. The facial beautification button 201 and the makeup button 202 are arranged in parallel, and a plurality of sub-options 203 of the facial beautification function are displayed on one side of the makeup button 202, that is, the facial beautification button 201, the makeup button 202, and the plurality of facial beautification sub-options 203 are arranged in parallel.

In some embodiments, each facial beautification sub-option may be selected by the user. The user selects a facial beautification sub-option, an icon of the facial beautification sub-option may be highlighted, and a scale bar of the facial beautification sub-option is displayed in the viewfinder frame.

In some other embodiments, the user may input a slide operation at the plurality of facial beautification sub-options 203, to control the plurality of facial beautification sub-options 203 to be displayed in a sliding manner. In some embodiments, the plurality of facial beautification sub-options 203 may be displayed only in display areas of the plurality of facial beautification sub-options in a sliding manner, and the facial beautification button 201 and the makeup button 202 are not affected. In some other embodiments, in a process of sliding the plurality of facial beautification sub-options 203, the facial beautification button 201 and the makeup button 202 may be pushed to synchronously slide.

The user taps the makeup button 202, as shown in (a) in FIG. 12, and the mobile phone displays the camera preview interface of the makeup function, as shown in (b) in FIG. 12. In the camera preview interface of the makeup function, the facial beautification button 201 is in the non-selected state, and the makeup button 202 is in the selected state. The facial beautification button 201 and the makeup button 202 are arranged in parallel, and a plurality of sub-options 204 of the makeup function are displayed on one side of the makeup button 202. An icon of a makeup sub-option "none" is highlighted.

In some embodiments, each makeup sub-option may be selected by the user. The user selects a makeup sub-option, an icon of the makeup sub-option may be highlighted, and a scale bar of the makeup sub-option is displayed in the viewfinder frame.

In some other embodiments, the user may input a slide operation at the plurality of makeup sub-options 204, to control the plurality of makeup sub-options 204 to be displayed in a sliding manner. In some embodiments, the plurality of makeup sub-options 204 may be displayed only in display areas of the plurality of makeup sub-options in a sliding manner, and the facial beautification button 201 and the makeup button 202 are not affected. In some other embodiments, in a process of sliding the plurality of makeup sub-options 204, the facial beautification button 201 and the makeup button 202 may be pushed to synchronously slide.

For operations that are input by the user in the camera preview interface of the facial beautification function and the camera preview interface of the makeup function, refer to the content in FIG. 2A to FIG. 2F, FIG.3, FIG. 4A to FIG. 4C, FIG. 5A to FIG. 5C, FIG. 6A to FIG. 6D, FIG. 7A to FIG. 7D, FIG. 8A to FIG. 8D, FIG. 9A to FIG. 9E, FIG. 10, and FIG. 11A to FIG. 11E. Details are not described herein again.

The input interaction method provided in the foregoing embodiments of this application may be further applied to an electronic device such as a tablet computer, a personal digital assistant (Personal Digital Assistant, PDA), a desktop computer, a laptop computer, a notebook computer, an ultra-mobile personal computer (Ultra-mobile Personal Computer, UMPC), a handheld computer, a netbook, or a wearable device.

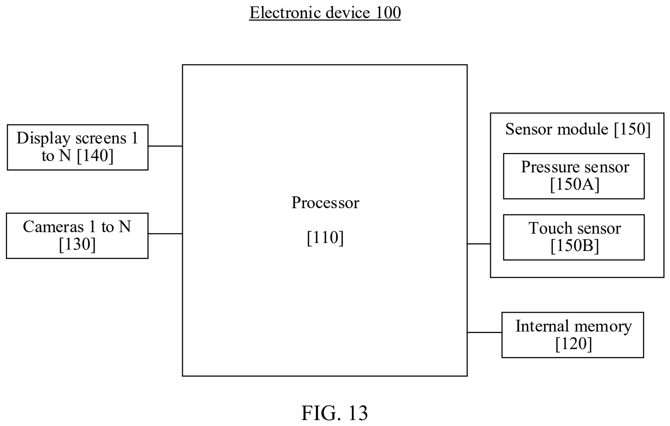

A mobile phone is used as an example. FIG. 13 shows an example of composition of an electronic device according to an embodiment of this application. As shown in FIG. 13, the electronic device 100 may include a processor 110, an internal memory 120, a camera 130, a display screen 140, a sensor module 150, and the like. It may be understood that, a structure shown in this embodiment does not constitute a specific limitation on the electronic device 100.

The processor 110 may include one or more processing units. For example, the processor 110 may include an application processor (application processor, AP), a graphics processing unit (graphics processing unit, GPU), an image signal processor (image signal processor, ISP), and a video codec. A memory may be further disposed in the processor 110, and is configured to store instructions and data.

The internal memory 120 may be configured to store computer-executable program code, and the executable program code includes instructions. The processor 110 runs the instructions stored in the internal memory 120, to perform various functional applications and data processing of the electronic device 100. In some embodiments, the internal memory 120 stores instructions for performing the input interaction method. The processor 110 may execute the instructions stored in the internal memory 120, to display camera preview interfaces of a facial beautification function and a makeup function, and input a plurality of operations in the camera preview interfaces of the facial beautification function and the makeup function.

The electronic device 100 may implement a photographing function through an ISP, the camera 130, the video codec, the GPU, the display screen 140, the application processor, and the like. The electronic device 100 implements a display function through the GPU, the display screen 140, the application processor, and the like.

In the sensor module 150, a pressure sensor 150A is configured to sense a pressure signal, and can convert the pressure signal into an electrical signal. A touch sensor 150B is also referred to as a "touch device". The touch sensor 150B may be disposed in the display screen 140. The touch sensor 150B and the display screen 140 form a touch screen, also referred to as a "touch control screen". The touch sensor 150B is configured to detect a touch operation performed on or near the touch sensor. The touch sensor may transmit the detected touch operation to the application processor, to determine a type of a touch event.

Another embodiment of this application provides a computer-readable storage medium. The computer-readable storage medium stores instructions, and the instructions, when executed on a computer or a processor, enable the computer or the processor to perform one or more steps in any one of the foregoing methods.

The computer-readable storage medium may be a non-transitory computer-readable storage medium. For example, the non-transitory computer-readable storage medium may be a read-only memory (Read-Only Memory, ROM), a random access memory (Random Access Memory, RAM), a CD-ROM, a magnetic tape, a floppy disk, or an optical data storage device.

Another embodiment of this application further provides a computer program product including instructions. The computer program product, when run on a computer or a processor, enables the computer or the processor to perform one or more steps in any one of the foregoing methods.

## Claims

1. An input interaction method, comprising:
displaying, by an electronic device, a first interface, wherein the first interface comprises a first area, a first makeup sub-option and a first button are displayed in the first area, and the first makeup sub-option corresponds to a first makeup look;
displaying, by the electronic device, a first makeup element, a second makeup element, and a second button in the first area in response to a tapping operation of a user on the first button, wherein the first makeup element is in a first state, the second makeup element is in a second state, and a plurality of options of the first makeup element are further displayed in the first area; and
displaying, by the electronic device, the first makeup sub-option and a second makeup sub-option in the first area in response to a tapping operation of the user on the second button, wherein the second makeup sub-option corresponds to a second makeup look.

2. The input interaction method according to claim 1, wherein before displaying, by the electronic device, the first makeup sub-option and the second makeup sub-option in the first area in response to the tapping operation of the user on the second button, the method further comprises:
receiving a tapping operation of the user on a first option of the first makeup element; and
displaying, by the electronic device in response to the tapping operation of the user on the first option of the first makeup element, that the first option is in the first state and another option of the first makeup element is in the second state.

3. The input interaction method according to claim 2, wherein a first portrait is further displayed in the first area of the first interface, and after receiving the tapping operation of the user on the first option of the first makeup element, the method further comprises:
displaying, by the electronic device in response to the tapping operation of the user on the first option of the first makeup element, a makeup look of the first option in an area in which the first portrait corresponds to the first makeup element.

4. The input interaction method according to claim 1, wherein a first portrait is further displayed in the first area of the first interface, and the method further comprises:
displaying, by the electronic device, the second makeup look on the first portrait in response to the tapping operation of the user on the second button.

5. The input interaction method according to any one of claims 1 to 4, wherein the electronic device displays the first makeup sub-option and the second makeup sub-option in the first area, the second makeup sub-option is in the first state, and the first makeup sub-option is in the second state; and the electronic device further displays a scale bar of the second makeup sub-option in the first area, the scale bar comprising a scale value and a scale mark.

6. The input interaction method according to claim 5, wherein an icon of the second makeup sub-option in the first state is a first icon.

7. The input interaction method according to claim 6, wherein after displaying, by the electronic device, the first makeup sub-option and the second makeup sub-option in the first area, the method further comprises:
displaying, by the electronic device in response to a tapping operation of the user on the first makeup sub-option, that the first makeup sub-option is in the first state, and the second makeup sub-option is in the second state, wherein an icon of the second makeup sub-option is a second icon; and further displaying, by the electronic device, a scale bar of the first makeup sub-option in the first area, wherein the scale bar comprises a scale value and a scale mark.

8. The input interaction method according to any one of claims 1 to 7, wherein the electronic device further displays a third button in the first area in response to the tapping operation of the user on the first button, and the method further comprises:
displaying, by the electronic device, the first interface in response to a tapping operation of the user on the third button.

9. The input interaction method according to claim 5, wherein the first portrait is further displayed in the first area of the first interface, the scale bar of the second makeup sub-option comprises a first scale value, and the method further comprises:
receiving a left-slide operation that is input by the user at the scale bar of the second makeup sub-option; and
displaying, by the electronic device, the scale mark and a second scale value at the scale bar of the second makeup sub-option in response to the left-slide operation of the user, wherein the second scale value is greater than the first scale value; and displaying, by the electronic device, an updated makeup look corresponding to the second makeup sub-option on the first portrait.

10. The input interaction method according to claim 9, further comprising:
displaying, by the electronic device, a first mark at the first scale value in the scale bar of the second makeup sub-option in response to the left-slide operation of the user.

11. The input interaction method according to any one of claims 1 to 10, further comprising:
receiving a long-press operation of the user on the second makeup sub-option;
displaying, by the electronic device in response to the long-press operation of the user on the second makeup sub-option, that the second makeup sub-option is in a third state;
displaying, by the electronic device, a second interface in response to a tapping operation of the user on a name of the second makeup sub-option, wherein the second interface comprises a first pop-up window and a keyboard of an input method, and the first pop-up window comprises a text input area and a fourth button;
receiving a text that is input by the user in the text input area, and displaying the text that is input by the user in the text input area; and
displaying, by the electronic device, the first makeup sub-option and the second makeup sub-option in the first area in response to a tapping operation of the user on the fourth button, wherein the second makeup button is in the third state, and the name of the second makeup sub-option is the text that is input by the user.

12. The input interaction method according to claim 11, wherein the second makeup sub-option in the third state further comprises a fifth button, and the method further comprises:
displaying, by the electronic device, a second pop-up window in response to a tapping operation of the user on the fifth button, wherein the second pop-up window comprises prompt information for deleting the second makeup sub-option and a sixth button; and
in response to a tapping operation of the user on the sixth button, displaying, by the electronic device, the first makeup sub-option, and skipping displaying the second makeup sub-option.

13. The input interaction method according to claim 12, wherein the second pop-up window further comprises a seventh button, and the method further comprises:
displaying, by the electronic device, the first makeup sub-option and the second makeup sub-option in response to a tapping operation of the user on the seventh button, wherein the second makeup sub-option is in the third state.

14. The input interaction method according to any one of claims 1 to 13, wherein the electronic device further displays the first button in the first area in response to the tapping operation of the user on the second button.

15. The input interaction method according to any one of claims 1 to 13, wherein a third makeup sub-option is further displayed in the first area of the first interface of the electronic device, the third makeup sub-option corresponds to a third makeup look, and in response to the tapping operation of the user on the second button, the electronic device displays the first makeup sub-option and the second makeup sub-option in the first area, and skips displaying the first button.

16. The input interaction method according to claim 15, wherein an icon of the third makeup sub-option is the same as the icon of the second makeup sub-option.

17. The input interaction method according to claim 15, wherein the second makeup sub-option is located after the third makeup sub-option in the first area, and the method further comprises:
displaying, by the electronic device in response to an operation of dragging the second makeup sub-option to a position before the third makeup sub-option and then releasing the second makeup sub-option, that the second makeup sub-option is located before the third makeup sub-option in the first area.

18. An electronic device, comprising:
one or more processors, a memory, and a display screen, wherein
the memory and the display screen are coupled to the one or more processors, the memory is configured to store a computer program, the computer program comprises computer instructions, and when the one or more processors execute the computer instructions, the electronic device performs the input interaction method according to any one of claims 1 to 17.

19. A computer-readable storage medium, configured to store a computer program, wherein the computer program, when executed, is specifically configured to implement the input interaction method according to any one of claims 1 to 17.

20. A computer program product, wherein the computer program product, when run on a computer, enables the computer to perform the input interaction method according to any one of claims 1 to 17.
